(19) Europäisches Patentamt / European Patent Office / Office européen des brevets

(11) **EP 4 604 654 A1**

(12) **EUROPEAN PATENT APPLICATION**
published in accordance with Art. 153(4) EPC

(43) Date of publication:
**20.08.2025  Bulletin 2025/34**

(21) Application number: 24744837.6

(22) Date of filing: 16.01.2024

(51) International Patent Classification (IPC):
**H04W 72/542** (2023.01)  **H04W 72/231** (2023.01)
**H04W 56/00** (2009.01)  **H04B 17/309** (2015.01)

(52) Cooperative Patent Classification (CPC):
**H04B 17/309; H04B 17/318; H04W 24/08;**
**H04W 56/00; H04W 72/231; H04W 72/542**

(86) International application number:
**PCT/KR2024/000743**

(87) International publication number:
**WO 2024/155057 (25.07.2024 Gazette 2024/30)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: 17.01.2023  KR 20230007005

(71) Applicants:
• **Hyundai Motor Company**
  **Seoul 06797 (KR)**
• **Kia Corporation**
  **Seoul 06797 (KR)**
• **Seoul National University R&DB Foundation**
  **Seoul 08826 (KR)**

(72) Inventors:
• **LEE, Jeong Su**
  **Hwaseong-si, Gyeonggi-do 18280 (KR)**
• **HAHN, Gene Back**
  **Hwaseong-si, Gyeonggi-do 18280 (KR)**
• **HONG, Ui Hyun**
  **Hwaseong-si, Gyeonggi-do 18280 (KR)**
• **SUH, Young Kil**
  **Hwaseong-si, Gyeonggi-do 18280 (KR)**
• **CHOI, Wan**
  **Seoul 08826 (KR)**
• **KIM, Bum Jun**
  **Seoul 08826 (KR)**
• **KWON, Jeonghyeon**
  **Seoul 08826 (KR)**

(74) Representative: **Isarpatent**
**Patent- und Rechtsanwälte**
**Barth Hassa Peckmann & Partner mbB**
**Friedrichstraße 31**
**80801 München (DE)**

(54) **METHOD AND DEVICE FOR RESOURCE ALLOCATION AT MULTIPLE TRANSMISSION AND RECEPTION POINTS IN WIRELESS COMMUNICATION SYSTEM**

(57)    A method of a UE according to an embodiment of the present disclosure may comprise the steps of: transmitting a preamble signal to each of two or more TRPs; receiving first information including an RP value obtained by measuring the preamble signal in each of the two or more TRPs and a propagation delay time of the preamble signal from each of the two or more TRPs; determining a first communication group including TRPs capable of communication, on the basis of the first information received from each of the two or more TRPs; selecting one reference TRP within the first communication group; and transmitting, to the reference TRP, the first information received from one or more TRPs other than the reference TRP among the TRPs capable of communication, which are included in the first communication group.

[FIG. 18]

EP 4 604 654 A1

S1810

—— all TRPs ——

Measure and report a
propagation delay and
RSRP of a preamble
transmitted by UE

S1820

—— UE ——

Configure communication
TRP(s) and reference
TRP based on propagation
delays and RSRPs of all TRPs

S1830

—— UE ——

Deliver information on
communication TRP(s) and
reference TRP to all TRPs

S1860

—— reference TRP ——

Deliver information on
numerology, SCS, and CP to
other communication TRPs
via a backhaul, and deliver
information on TA to the UE

S1850

—— reference TRP ——

Determine a numerology,
SCS, and CP to be used by
reference TRP and other
communication TRPs,
and a TA of UE

S1840

—— UE ——

Deliver information on
propagation delays of
other communication TRPs
to reference TRP

S1870

—— reference TRP ——

Deliver information on
numerology, SCS, and CP to
other communication TRPs
via the UE, and deliver
information on TA to the UE

**Description**

[Technical Field]

The present disclosure relates to an enhanced communication technique, and more particularly, to a technique for resource allocation in multiple transmission and reception points (MTRPs).

[Background Art]

A communication network (e.g. 5G communication network or 6G communication network) is being developed to provide enhanced communication services compared to the existing communication networks (e.g. long term evolution (LTE), LTE-Advanced (LTE-A), etc.). The 5G communication network (e.g. New Radio (NR) communication network) can support frequency bands both below 6GHz and above 6GHz. In other words, the 5G communication network can support both a frequency region 1 (FR1) and/or FR2 bands. Compared to the LTE communication network, the 5G communication network can support various communication services and scenarios. For example, usage scenarios of the 5G communication network may include enhanced Mobile BroadBand (eMBB), Ultra Reliable Low Latency Communication (URLLC), massive Machine Type Communication (mMTC), and the like.

The 6G communication network can support a variety of communication services and scenarios compared to the 5G communication network. The 6G communication network can meet the requirements of hyper-performance, hyper-bandwidth, hyper-space, hyper-precision, hyper-intelligence, and/or hyper-reliability. The 6G communication network can support diverse and wide frequency bands and can be applied to various usage scenarios such as terrestrial communication, non-terrestrial communication, sidelink communication, and the like.

Meanwhile, in 5G NR, a multiple transmission and reception point (MTRP) technique refers to a technique in which a base station (e.g. gNB) utilizes multiple physically separated TRPs to communicate with a terminal. The MTRP technique can address issues such as reduced quality of service (QoS) for terminals located in cell edges, which are far from the base station, and inter-cell interference caused by signals from base stations in different cells. Furthermore, the MTRP technique can provide an additional communication path for terminals located in non-line-of-sight (NLOS) paths, such as those in millimeter-wave frequency bands.

In the MTRP technique, TRPs may be deployed at various locations within a coverage area of a specific base station. In other words, multiple TRPs may be installed at different locations within a single base station. Therefore, a single terminal can communicate with two or more TRPs. In such cases, methods for selecting TRPs and allocating resources to the selected TRP(s) are required.

[Disclosure]

[Technical Problem]

The present disclosure is directed to providing a method and an apparatus for TRP selection and resource allocation in an MTRP environment of a communication system.

[Technical Solution]

A method of a user equipment (UE), according to a first exemplary embodiment of the present disclosure for achieving the above-described objective, may comprise: transmitting a preamble signal to each of two or more transmission and reception points (TRPs); receiving, from each of the two or more TRPs, first information including a propagation delay of the preamble signal and a received power (RP) value measured at each of the two or more TRPs; determining a first communication group including TRPs capable of communication based on the first information received from each of the two or more TRPs; selecting one reference TRP within the first communication group; transmitting, to the reference TRP, the first information received from one or more TRPs other than the reference TRP among the TRPs capable of communication included in the first communication group; and receiving, from the reference TRP, a timing advance (TA) value to be used for uplink communication with the TRPs capable of communication included in the first communication group.

The first information received from each of the two or more TRPs may further include an identifier (ID) of a TRP transmitting the first information.

The method may further comprise: transmitting, to all TRPs that have received the first information, second information including information on the reference TRP and the one or more TRPs included in the first communication group.

Each of the TRPs capable of communication included in the first communication group may be a TRP having a propagation delay smaller than a preset threshold value.

The preset threshold value may be determined based on capability information of the UE.

The reference TRP may be a TRP having a highest RP value among the TRPs capable of communication within the first communication group.

Each of the TRPs capable of communication included in the first communication group may be a TRP having an RP value equal to or greater than a preset threshold value.

The reference TRP may be a TRP having a smallest propagation delay among the TRPs capable of communication within the first communication group.

The method may further comprise: receiving, from the reference TRP, a command instructing to transmit third information to at least one TRP included in the first communication group and the third information; and transmitting the third information to the at least one TRP included in the first communication group, wherein the third information includes at least one of a TRP identifier, a numerology, a subcarrier spacing (SCS), or a cyclic prefix (CP).

A method of a first base station, according to an exemplary embodiment of the present disclosure for achieving the above-described objective, may comprise: receiving a preamble signal from a user equipment (UE) via a transmission and reception point (TRP) connected to the first base station; measuring a propagation delay and a received power (RP) of the preamble signal; transmitting first information including the measured propagation delay and the RP to the UE via the TRP; receiving second information including information on at least one other TRP and information on propagation delay(s) and RP(s) transmitted by the at least one other TRP to the UE; determining a timing advance (TA) value to be used for communication with the UE and third information, based on the first information and the second information corresponding to the at least one other TRP; and transmitting the TA value to the UE via the TRP, wherein the third information includes at least one of a numerology, a subcarrier spacing (SCS), or a cyclic prefix (CP) to be used by the at least one other TRP for communication with the UE.

The method may further comprise: receiving, from the UE, information on a first communication group including the at least one other TRP capable of communicating with the UE.

The method may further comprise: transmitting the third information to a TRP included in the first communication group or a second base station connected to a TRP included in the first communication group.

The method may further comprise: transmitting the third information and first instruction information to the UE, wherein the first instruction information is information that instructs to transmit the third information to a TRP included in the first communication group.

A user equipment (UE), according to an exemplary embodiment of the present disclosure for achieving the above-described objective, may comprise at least one processor, wherein the at least one processor may cause the UE to perform: transmitting a preamble signal to each of two or more transmission and reception points (TRPs); receiving, from each of the two or more TRPs, first information including a propagation delay of the preamble signal and a received power (RP) value measured at each of the two or more TRPs; determining a first communication group including TRPs capable of communication based on the first information received from each of the two or more TRPs; selecting one reference TRP within the first communication group; transmitting, to the reference TRP, the first information received from one or more TRPs other than the reference TRP among the TRPs capable of communication included in the first communication group; and receiving, from the reference TRP, a timing advance (TA) value to be used for uplink communication with the TRPs capable of communication included in the first communication group.

The first information received from each of the two or more TRPs may further include an identifier (ID) of a TRP transmitting the first information.

The at least one processor may further cause the UE to perform: transmitting, to all TRPs that have received the first information, second information including information on the reference TRP and the one or more TRPs included in the first communication group.

Each of the TRPs capable of communication included in the first communication group may be a TRP having a propagation delay smaller than a preset threshold value.

The preset threshold value may be determined based on capability information of the UE, and the reference TRP may be a TRP having a highest RP value among the TRPs capable of communication within the first communication group.

Each of the TRPs capable of communication included in the first communication group may be a TRP having an RP value equal to or greater than a preset threshold value, and the reference TRP may be a TRP having a smallest propagation delay among the TRPs capable of communication within the first communication group.

The at least one processor may cause the UE to perform: receiving, from the reference TRP, a command instructing to transmit third information to at least one TRP included in the first communication group and the third information; and transmitting the third information to the at least one TRP included in the first communication group, wherein the third information includes at least one of a TRP identifier, a numerology, a subcarrier spacing (SCS), or a cyclic prefix (CP).

[Advantageous Effects]

According to the present disclosure, in an MTRP environment, there is an advantage of being able to perform uplink transmission to multiple TRPs using a single timing advance (TA) value without inter-symbol interference (ISI). Additionally, in the MTRP environment, the efficiency of communication can be improved by allowing the numerology, subcarrier spacing (SCS), and cyclic prefix (CP) of each TRP to be determined based on the TA value at a reference TRP and/or a base station associated with the reference TRP. Furthermore, in cases where TRPs do not have a backhaul connection, there is an advantage of enabling the transmission of such information to communication TRPs other than the reference TRP via a UE as an intermediary.

[Description of Drawings]

FIG. 1 is a conceptual diagram illustrating a first exemplary embodiment of a communication system.
FIG. 2 is a block diagram illustrating a first exemplary embodiment of a communication node constituting a communication system.
FIG. 3 is a block diagram illustrating a first exemplary embodiment of communication nodes performing communication.
FIG. 4A is a block diagram illustrating a first exemplary embodiment of a transmission path.
FIG. 4B is a block diagram illustrating a first exemplary embodiment of a reception path.
FIG. 5 is a conceptual diagram illustrating a first exemplary embodiment of a system frame in a communication system.
FIG. 6 is a conceptual diagram illustrating a first exemplary embodiment of a subframe in a communication system.
FIG. 7 is a conceptual diagram illustrating a first exemplary embodiment of a slot in a communication system.
FIG. 8 is a conceptual diagram illustrating a first exemplary embodiment of a time-frequency resource in a communication system.
FIG. 9A is a conceptual diagram illustrating a downlink reception timing and an uplink transmission timing based on reference TRP and TA configuration according to the current NR technical specifications in a 5G NR MTRP environment.
FIG. 9B is a conceptual diagram illustrating an uplink transmission timing and an expected uplink transmission timing based on reference TRP and TA configuration according to the current NR technical specifications in a 5G NR MTRP environment.
FIG. 10 is a sequence chart illustrating a procedure in which a UE transmits a PRACH preamble to multiple TRPs.
FIG. 11 is a sequence chart illustrating a case in which a plurality of TRPs provide propagation delays and RSRP values to a UE.
FIG. 12 is a sequence chart illustrating a procedure in which a UE determines communication TRP(s) and a reference TRP.
FIG. 13 is a sequence chart illustrating a case in which a UE transmits information on determined communication TRP(s) and reference TRP to all TRPs to which PRACH preambles have been transmitted.
FIG. 14 is a sequence chart illustrating a case in which a UE transmits identifiers and propagation delay values of communication TRPs, excluding a reference TRP, to the reference TRP.
FIG. 15 is a sequence chart illustrating a case in which a reference TRP determines information on resources to be used between the reference TRP and a UE and information on resources to be used between communication TRPs, excluding the reference TRP, and the UE.
FIG. 16 is a sequence chart illustrating a case in which a reference TRP transmits information on allocated resources to other communication TRPs and a UE.
FIG. 17 is a sequence chart illustrating a case in which a reference TRP transmits information on resources to be used for communication with a UE by communication TRPs to other communication TRPs via the UE.
FIG. 18 is a conceptual diagram illustrating an operational flow based on an overall combination of exemplary embodiments of the present disclosure.
FIG. 19 is a sequence chart illustrating a case where, in presence of a backhaul between TRPs, resources for communication with a UE are determined using all exemplary embodiments.
FIG. 20 is a sequence chart illustrating a case where resources for communication with a UE are determined using all exemplary embodiments in an environment where no backhaul exists between TRPs.

[Mode for Invention]

Since the present disclosure may be variously modified and have several forms, specific exemplary embodiments will be shown in the accompanying drawings and be described in detail in the detailed description. It should be understood, however, that it is not intended to limit the present disclosure to the specific exemplary embodiments but, on the contrary, the present disclosure is to cover all modifications and alternatives falling within the spirit and scope of the present disclosure.

Relational terms such as first, second, and the like may be used for describing various elements, but the elements should not be limited by the terms. These terms are only used to distinguish one element from another. For example, a first component may be named a second component without departing from the scope of the present disclosure, and the second component may also be similarly named the first component. The term "and/or" means any one or a combination of a plurality of related and described items.

In the present disclosure, "at least one of A and B" may refer to "at least one of A or B" or "at least one of combinations of one or more of A and B". In addition, "one or more of A and B" may refer to "one or more of A or B" or "one or more of combinations of one or more of A and B".

In the present disclosure, '(re)transmission' may refer to 'transmission', 'retransmission', or 'transmission and retransmission', '(re)configuration' may refer to 'configuration', 'reconfiguration', or 'configuration and reconfiguration', '(re)connection' may refer to 'connection', 'reconnection', or 'connection and reconnection', and '(re)access' may refer to 'access', 're-access', or 'access and re-access'.

When it is mentioned that a certain component is "coupled with" or "connected with" another component, it should be understood that the certain component is directly "coupled with" or "connected with" to the other component or a further component may be disposed therebetween. In contrast, when it is mentioned that a certain component is "directly coupled with" or "directly connected with" another component, it will be understood that a further component is not disposed therebetween.

The terms used in the present disclosure are only used to describe specific exemplary embodiments, and are not intended to limit the present disclosure. The singular expression includes the plural expression unless the context clearly dictates otherwise. In the present disclosure, terms such as 'comprise' or 'have' are intended to designate that a feature, number, step, operation, component, part, or combination thereof described in the specification exists, but it should be understood that the terms do not preclude existence or addition of one or more features, numbers, steps, operations, components, parts, or combinations thereof.

Unless otherwise defined, all terms (including technical and scientific terms) used herein have the same meaning as commonly understood by one of ordinary skill in the art to which this disclosure belongs. Terms that are generally used and have been in dictionaries should be construed as having meanings matched with contextual meanings in the art. In this description, unless defined clearly, terms are not necessarily construed as having formal meanings.

Hereinafter, exemplary embodiments of the present disclosure will be described in detail with reference to the accompanying drawings. In describing the disclosure, to facilitate the entire understanding of the disclosure, like numbers refer to like elements throughout the description of the figures and the repetitive description thereof will be omitted. The operations according to the exemplary embodiments described explicitly in the present disclosure, as well as combinations of the exemplary embodiments, extensions of the exemplary embodiments, and/or variations of the exemplary embodiments, may be performed. Some operations may be omitted, and a sequence of operations may be altered.

Even when a method (e.g. transmission or reception of a signal) to be performed at a first communication node among communication nodes is described in exemplary embodiments, a corresponding second communication node may perform a method (e.g. reception or transmission of the signal) corresponding to the method performed at the first communication node. That is, when an operation of a user equipment (UE) is described, a base station corresponding thereto may perform an operation corresponding to the operation of the UE. Conversely, when an operation of a base station is described, a corresponding UE may perform an operation corresponding to the operation of the base station.

The base station may be referred to by various terms such as NodeB, evolved NodeB, next generation node B (gNodeB), gNB, device, apparatus, node, communication node, base transceiver station (BTS), radio remote head (RRH), transmission reception point (TRP), radio unit (RU), road side unit (RSU), radio transceiver, access point, access node, and the like. The user equipment (UE) may be referred to by various terms such as terminal, device, apparatus, node, communication node, end node, access terminal, mobile terminal, station, subscriber station, mobile station, portable subscriber station, on-board unit (OBU), and the like.

In the present disclosure, signaling may be one or a combination of two or more of higher layer signaling, MAC signaling, and physical (PHY) signaling. A message used for higher layer signaling may be referred to as a 'higher layer message' or 'higher layer signaling message'. A message used for MAC signaling may be referred to as a 'MAC message' or 'MAC signaling message'. A message used for PHY signaling may be referred to as a 'PHY message' or 'PHY signaling message'. The higher layer signaling may refer to an operation of transmitting and receiving system information (e.g. master information block (MIB), system information block (SIB)) and/or an RRC message. The MAC signaling may refer to an operation of transmitting and receiving a MAC control element (CE). The PHY signaling may refer to an operation of transmitting and receiving control information (e.g. downlink control information (DCI), uplink control information (UCI), or sidelink control information (SCI)).

In the present disclosure, 'configuration of an operation (e.g. transmission operation)' may refer to signaling of configuration information (e.g. information elements, parameters) required for the operation and/or information indicating to perform the operation. 'configuration of information elements (e.g. parameters)' may refer to signaling of the information elements. In the present disclosure, 'signal and/or channel' may refer to signal, channel, or both signal and channel, and 'signal' may be used to mean 'signal and/or channel'.

A communication network to which exemplary embodiments are applied is not limited to that described below, and the exemplary embodiments may be applied to various communication networks (e.g. 4G communication networks, 5G communication networks, and/or 6G communication networks). Here, 'communication network' may be used interchangeably with a term 'communication system'.

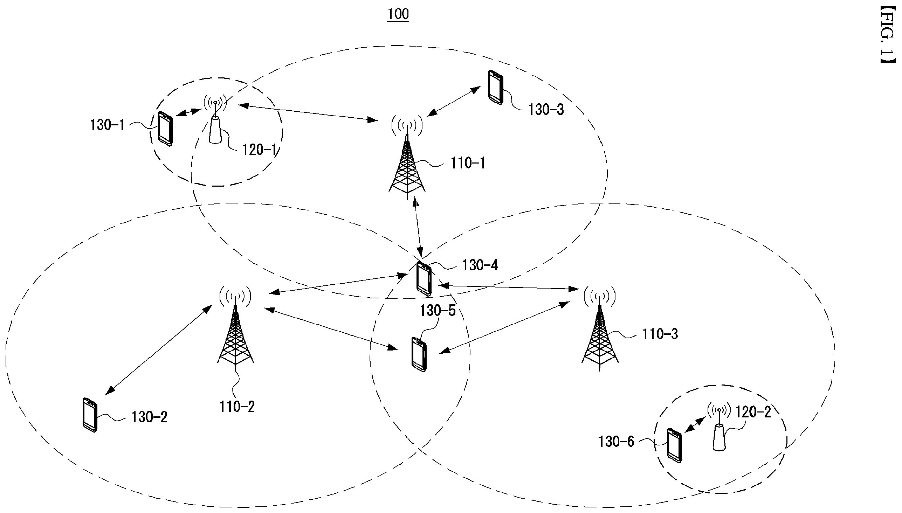

FIG. 1 is a conceptual diagram illustrating a first exemplary embodiment of a communication system.

As shown in FIG. 1, a communication system 100 may comprise a plurality of communication nodes 110-1, 110-2, 110-3, 120-1, 120-2, 130-1, 130-2, 130-3, 130-4, 130-5, and 130-6. In addition, the communication system 100 may further include a core network (e.g. a serving gateway (S-GW), a packet data network (PDN) gateway (P-GW), a mobility management entity (MME). When the communication system 100 is a 5G communication (e.g. NR system), the core network may include an access and mobility management function (AMF), a user plane function (UPF), a session management function (SMF), and the like.

The plurality of communication nodes 110 to 130 may support communication protocols (e.g. LTE communication protocol, LTE-A communication protocol, NR communication protocol, etc.) specified in 3rd generation partnership project (3GPP) standards. The plurality of communication nodes 110 to 130 may support a code division multiple access (CDMA) technique, a wideband CDMA (WCDMA) technique, a time division multiple access (TDMA) technique, a frequency division multiple access (FDMA) technique, an orthogonal frequency division multiplexing (OFDM) technique, a filtered OFDM technique, a cyclic prefix OFDM (CP-OFDM) technique, a discrete Fourier transform spread OFDM (DFT-s-OFDM) technique, an orthogonal frequency division multiple access (OFDMA) technique, a single carrier FDMA (SC-FDMA) technique, a non-orthogonal multiple access (NOMA) technique, a generalized frequency division multiplexing (GFDM) technique, a filter bank multi-carrier (FBMC) technique, a universal filtered multi-carrier (UFMC) technique, a space division multiple access (SDMA) technique, or the like. Each of the plurality of communication node may have the following structure.

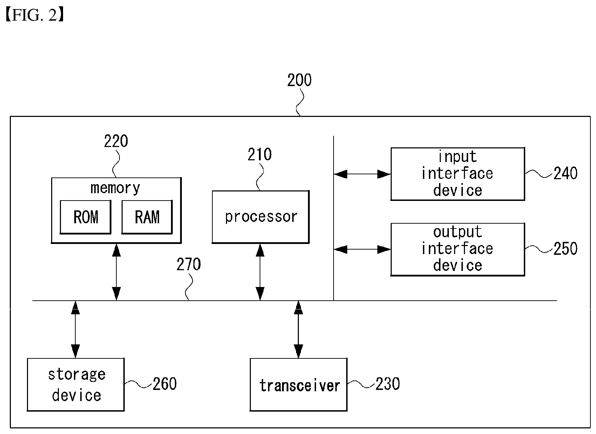

FIG. 2 is a block diagram illustrating a first exemplary embodiment of a communication node constituting a communication system.

As shown in FIG. 2, a communication node 200 may comprise at least one processor 210, a memory 220, and a transceiver 230 connected to the network for performing communications. Also, the communication node 200 may further comprise an input interface device 240, an output interface device 250, a storage device 260, and the like. Each component included in the communication node 200 may communicate with each other as connected through a bus 270.

The processor 210 may execute a program stored in at least one of the memory 220 and the storage device 260. The processor 210 may refer to a central processing unit (CPU), a graphics processing unit (GPU), or a dedicated processor on which methods in accordance with embodiments of the present disclosure are performed. Each of the memory 220 and the storage device 260 may be constituted by at least one of a volatile storage medium and a non-volatile storage medium. For example, the memory 220 may comprise at least one of read-only memory (ROM) and random access memory (RAM).

Referring again to FIG. 1, the communication system 100 may comprise a plurality of base stations 110-1, 110-2, 110-3, 120-1, and 120-2, and a plurality of terminals 130-1, 130-2, 130-3, 130-4, 130-5, and 130-6. The communication system 100 including the base stations 110-1, 110-2, 110-3, 120-1, and 120-2 and the terminals 130-1, 130-2, 130-3, 130-4, 130-5, and 130-6 may be referred to as an 'access network'. Each of the first base station 110-1, the second base station 110-2, and the third base station 110-3 may form a macro cell, and each of the fourth base station 120-1 and the fifth base station 120-2 may form a small cell. The fourth base station 120-1, the third terminal 130-3, and the fourth terminal 130-4 may belong to cell coverage of the first base station 110-1. Also, the second terminal 130-2, the fourth terminal 130-4, and the fifth terminal 130-5 may belong to cell coverage of the second base station 110-2. Also, the fifth base station 120-2, the fourth terminal 130-4, the fifth terminal 130-5, and the sixth terminal 130-6 may belong to cell coverage of the third base station 110-3. Also, the first terminal 130-1 may belong to cell coverage of the fourth base station 120-1, and the sixth terminal 130-6 may belong to cell coverage of the fifth base station 120-2.

Here, each of the plurality of base stations 110-1, 110-2, 110-3, 120-1, and 120-2 may refer to a Node-B, evolved Node-B (eNB), gNB, advanced base station (ABS), high reliability-base station (HR-BS), base transceiver station (BTS), radio base station, radio transceiver, access point, access node, radio access station (RAS), mobile multihop relay-base station (MMR-BS), relay station (RS), advanced relay station (ARS), high reliability-relay station (HR-RS), home NodeB (HNB), home eNodeB (HeNB), road side unit (RSU), radio remote head (RRH), transmission point (TP), transmission and reception point (TRP), or the like.

Each of the plurality of terminals 130-1, 130-2, 130-3, 130-4, 130-5, and 130-6 may refer to a user equipment (UE), terminal equipment (TE), advanced mobile station (AMS), high reliability-mobile station (HR-MS), terminal, access terminal, mobile terminal, station, subscriber station, mobile station, portable subscriber station, node, device, on-board unit (OBU), or the like.

Meanwhile, each of the plurality of base stations 110-1, 110-2, 110-3, 120-1, and 120-2 may operate in the same frequency band or in different frequency bands. The plurality of base stations 110-1, 110-2, 110-3, 120-1, and 120-2 may be connected to each other via an ideal backhaul or a non-ideal backhaul, and exchange information with each other via the ideal or non-ideal backhaul. Also, each of the plurality of base stations 110-1, 110-2, 110-3, 120-1, and 120-2 may be connected to the core network through the ideal or non-ideal backhaul. Each of the plurality of base stations 110-1, 110-2, 110-3, 120-1, and 120-2 may transmit a signal received from the core network to the corresponding terminal 130-1, 130-2, 130-3, 130-4, 130-5, or 130-6, and transmit a signal received from the corresponding terminal 130-1, 130-2, 130-3, 130-4, 130-5, or 130-6 to the core network.

In addition, each of the plurality of base stations 110-1, 110-2, 110-3, 120-1, and 120-2 may support multi-input multi-output (MIMO) transmission (e.g. a single-user MIMO (SU-MIMO), multi-user MIMO (MU-MIMO), massive MIMO, or the like), coordinated multipoint (CoMP) transmission, carrier aggregation (CA) transmission, transmission in an unlicensed band, sidelink communication (e.g. device-to-device (D2D) communication, proximity services (ProSe)), Internet of Things (IoT) communication, dual connectivity (DC), and/or the like. Here, each of the plurality of terminals 130-1, 130-2, 130-3, 130-4, 130-5, and 130-6 may perform operations corresponding to the operations of the plurality of base stations 110-1, 110-2, 110-3, 120-1, and 120-2, and operations supported by the plurality of base stations 110-1, 110-2, 110-3, 120-1, and 120-2. For example, the second base station 110-2 may transmit a signal to the fourth terminal 130-4 in the SU-MIMO manner, and the fourth terminal 130-4 may receive the signal from the second base station 110-2 in the SU-MIMO manner. Alternatively, the second base station 110-2 may transmit a signal to the fourth terminal 130-4 and fifth terminal 130-5 in the MU-MIMO manner, and the fourth terminal 130-4 and fifth terminal 130-5 may receive the signal from the second base station 110-2 in the MU-MIMO manner.

The first base station 110-1, the second base station 110-2, and the third base station 110-3 may transmit a signal to the fourth terminal 130-4 in the CoMP transmission manner, and the fourth terminal 130-4 may receive the signal from the first base station 110-1, the second base station 110-2, and the third base station 110-3 in the CoMP manner. Also, each of the plurality of base stations 110-1, 110-2, 110-3, 120-1, and 120-2 may exchange signals with the corresponding terminals 130-1, 130-2, 130-3, 130-4, 130-5, or 130-6 which belongs to its cell coverage in the CA manner. Each of the base stations 110-1, 110-2, and 110-3 may control sidelink communications between the fourth terminal 130-4 and the fifth terminal 130-5, and thus the fourth terminal 130-4 and the fifth terminal 130-5 may perform the sidelink communications under control of the second base station 110-2 and the third base station 110-3, respectively.

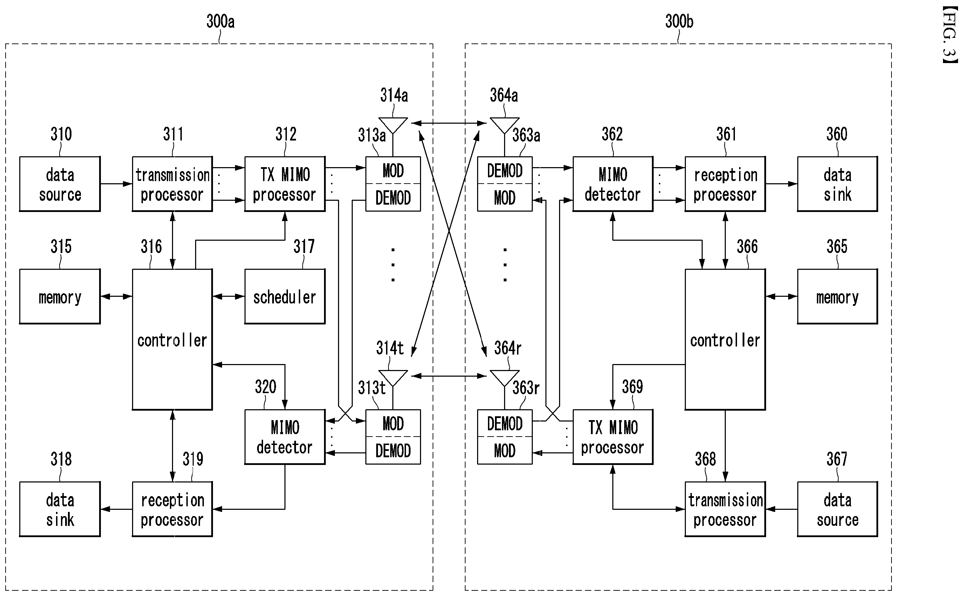

Meanwhile, communication nodes that perform communications in the communication network may be configured as follows. A communication node shown in FIG. 3 may be a specific exemplary embodiment of the communication node shown in FIG. 2.

FIG. 3 is a block diagram illustrating a first exemplary embodiment of communication nodes performing communication.

As shown in FIG. 3, each of a first communication node 300a and a second communication node 300b may be a base station or UE. The first communication node 300a may transmit a signal to the second communication node 300b. A transmission processor 311 included in the first communication node 300a may receive data (e.g. data unit) from a data source 310. The transmission processor 311 may receive control information from a controller 316. The control information may include at least one of system information, RRC configuration information (e.g. information configured by RRC signaling), MAC control information (e.g. MAC CE), or PHY control information (e.g. DCI, SCI).

The transmission processor 311 may generate data symbol(s) by performing processing operations (e.g. encoding operation, symbol mapping operation, etc.) on the data. The transmission processor 311 may generate control symbol(s) by performing processing operations (e.g. encoding operation, symbol mapping operation, etc.) on the control information. In addition, the transmission processor 311 may generate synchronization/reference symbol(s) for synchronization signals and/or reference signals.

A Tx MIMO processor 312 may perform spatial processing operations (e.g. precoding operations) on the data symbol(s), control symbol(s), and/or synchronization/reference symbol(s). An output (e.g. symbol stream) of the Tx MIMO processor 312 may be provided to modulators (MODs) included in transceivers 313a to 313t. The modulator may generate modulation symbols by performing processing operations on the symbol stream, and may generate signals by performing additional processing operations (e.g. analog conversion operations, amplification operation, filtering operation, up-conversion operation, etc.) on the modulation symbols. The signals generated by the modulators of the transceivers 313a to 313t may be transmitted through antennas 314a to 314t.

The signals transmitted by the first communication node 300a may be received at antennas 364a to 364r of the second communication node 300b. The signals received at the antennas 364a to 364r may be provided to demodulators (DEMODs) included in transceivers 363a to 363r. The demodulator (DEMOD) may obtain samples by performing processing operations (e.g. filtering operation, amplification operation, down-conversion operation, digital conversion operation, etc.) on the signals. The demodulator may perform additional processing operations on the samples to obtain symbols. A MIMO detector 362 may perform MIMO detection operations on the symbols. A reception processor 361 may perform processing operations (e.g. de-interleaving operation, decoding operation, etc.) on the symbols. An output of the reception processor 361 may be provided to a data sink 360 and a controller 366. For example, the data may be provided to the data sink 360 and the control information may be provided to the controller 366.

On the other hand, the second communication node 300b may transmit signals to the first communication node 300a. A transmission processor 368 included in the second communication node 300b may receive data (e.g. data unit) from a data source 367 and perform processing operations on the data to generate data symbol(s). The transmission processor 368 may receive control information from the controller 366 and perform processing operations on the control information to generate control symbol(s). In addition, the transmission processor 368 may generate reference symbol(s) by performing processing operations on reference signals.

A Tx MIMO processor 369 may perform spatial processing operations (e.g. precoding operations) on the data symbol(s), control symbol(s), and/or reference symbol(s). An output (e.g. symbol stream) of the Tx MIMO processor 369 may be provided to modulators (MODs) included in the transceivers 363a to 363t. The modulator may generate modulation symbols by performing processing operations on the symbol stream, and may generate signals by performing additional processing operations (e.g. analog conversion operation, amplification operation, filtering operation, up-conversion operations) on the modulation symbols. The signals generated by the modulators of the transceivers 363a to 363t may be transmitted through the antennas 364a to 364t.

The signals transmitted by the second communication node 300b may be received at the antennas 314a to 314r of the first communication node 300a. The signals received at the antennas 314a to 314r may be provided to demodulators (DEMODs) included in the transceivers 313a to 313r. The demodulator may obtain samples by performing processing operations (e.g. filtering operation, amplification operation, down-conversion operation, digital conversion operation) on the signals. The demodulator may perform additional processing operations on the samples to obtain symbols. A MIMO detector 320 may perform a MIMO detection operation on the symbols. The reception processor 319 may perform processing operations (e.g. de-interleaving operation, decoding operation, etc.) on the symbols. An output of the reception processor 319 may be provided to a data sink 318 and the controller 316. For example, the data may be provided to the data sink 318 and the control information may be provided to the controller 316.

Memories 315 and 365 may store the data, control information, and/or program codes. A scheduler 317 may perform scheduling operations for communication. The processors 311, 312, 319, 361, 368, and 369 and the controllers 316 and 366 shown in FIG. 3 may be the processor 210 shown in FIG. 2, and may be used to perform methods described in the present disclosure.

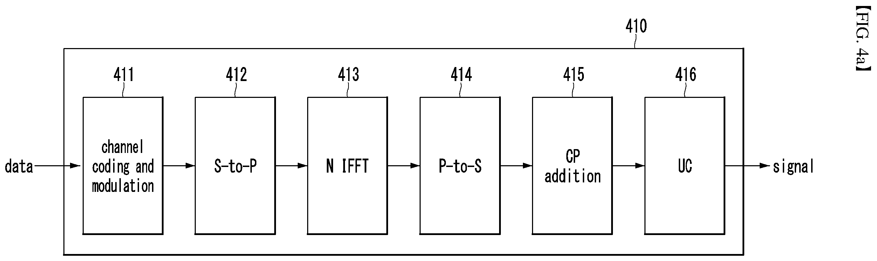

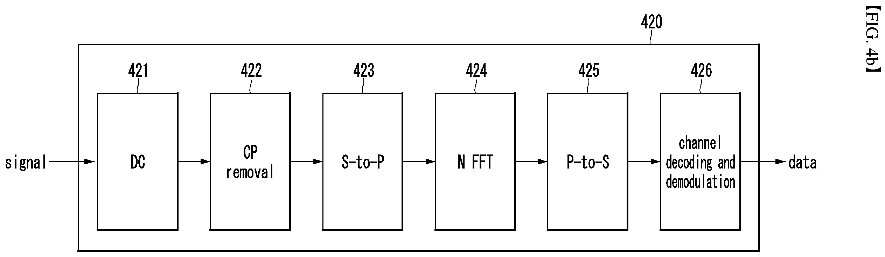

FIG. 4A is a block diagram illustrating a first exemplary embodiment of a transmission path, and FIG. 4B is a block diagram illustrating a first exemplary embodiment of a reception path.

As shown in FIGS. 4A and 4B, a transmission path 410 may be implemented in a communication node that transmits signals, and a reception path 420 may be implemented in a communication node that receives signals. The transmission path 410 may include a channel coding and modulation block 411, a serial-to-parallel (S-to-P) block 412, an N-point inverse fast Fourier transform (N-point IFFT) block 413, a parallel-to-serial (P-to-S) block 414, a cyclic prefix (CP) addition block 415, and up-converter (UC) 416. The reception path 420 may include a down-converter (DC) 421, a CP removal block 422, an S-to-P block 423, an N-point FFT block 424, a P-to-S block 425, and a channel decoding and demodulation block 426. Here, N may be a natural number.

In the transmission path 410, information bits may be input to the channel coding and modulation block 411. The channel coding and modulation block 511 may perform a coding operation (e.g. low-density parity check (LDPC) coding operation, polar coding operation, etc.) and a modulation operation (e.g. Quadrature Phase Shift Keying (OPSK), Quadrature Amplitude Modulation (QAM), etc.) on the information bits. An output of the channel coding and modulation block 411 may be a sequence of modulation symbols.

The S-to-P block 412 may convert frequency domain modulation symbols into parallel symbol streams to generate N parallel symbol streams. N may be the IFFT size or the FFT size. The N-point IFFT block 413 may generate time domain signals by performing an IFFT operation on the N parallel symbol streams. The P-to-S block 414 may convert the output (e.g., parallel signals) of the N-point IFFT block 413 to serial signals to generate the serial signals.

The CP addition block 415 may insert a CP into the signals. The UC 416 may up-convert a frequency of the output of the CP addition block 415 to a radio frequency (RF) frequency. Further, the output of the CP addition block 415 may be filtered in baseband before the up-conversion.

The signal transmitted from the transmission path 410 may be input to the reception path 420. Operations in the reception path 420 may be reverse operations for the operations in the transmission path 410. The DC 421 may down-convert a frequency of the received signals to a baseband frequency. The CP removal block 422 may remove a CP from the signals. The output of the CP removal block 422 may be serial signals. The S-to-P block 423 may convert the serial signals into parallel signals. The N-point FFT block 424 may generate N parallel signals by performing an FFT algorithm. The P-to-S block 425 may convert the parallel signals into a sequence of modulation symbols. The channel decoding and demodulation block 426 may perform a demodulation operation on the modulation symbols and may restore data by performing a decoding operation on a result of the demodulation operation.

In FIGS. 4A and 4B, discrete Fourier transform (DFT) and inverse DFT (IDFT) may be used instead of FFT and IFFT. Each of the blocks (e.g. components) in FIGS. 4A and 4B may be implemented by at least one of hardware, software, or firmware. For example, some blocks in FIGS. 4A and 4B may be implemented by software, and other blocks may be implemented by hardware or a combination of hardware and software. In FIGS. 4A and 4B, one block may be subdivided into a plurality of blocks, a plurality of blocks may be integrated into one block, some blocks may be omitted, and blocks supporting other functions may be added.

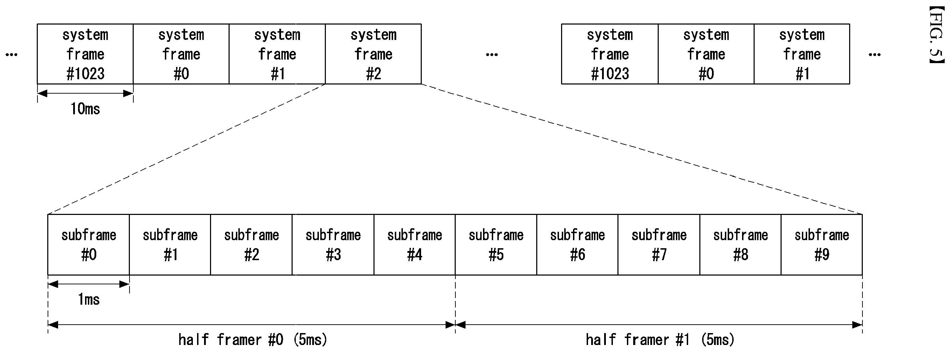

FIG. 5 is a conceptual diagram illustrating a first exemplary embodiment of a system frame in a communication system.

As shown in FIG. 5, time resources in the communication system may be divided on a frame basis. For example, system frames of the communication system may be configured continuously in the time domain. The length of the system frame may be 10 millisecond (ms). A system frame number (SFN) may be set to one of #0 to #1023. In this case, 1024 system frames may be repeated on the time domain of the communication system. For example, an SFN of a system frame after the system frame #1023 may be #0.

One system frame may include two half frames. The length of one half frame may be 5 ms. A half frame located at a starting region of the system frame may be referred to as 'half frame #0', and a half frame located at an ending region of the system frame may be referred to as 'half frame #1'. One system frame may include 10 subframes. The length of one subframe may be 1 ms. 10 subframes within one system frame may be referred to as subframes #0-#9.

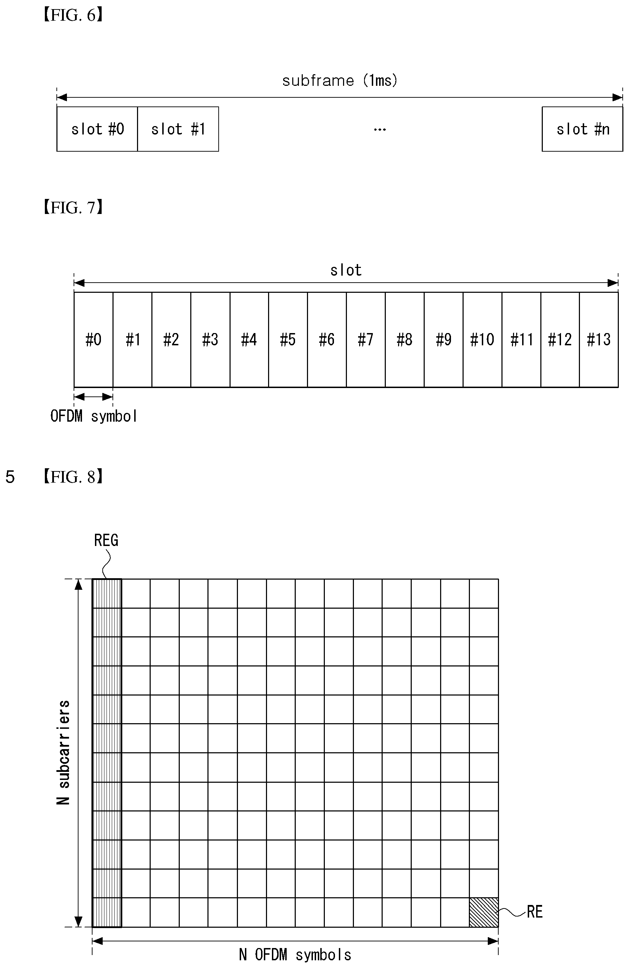

FIG. 6 is a conceptual diagram illustrating a first exemplary embodiment of a subframe in a communication system.

As shown in FIG. 6, one subframe may include n slots, and n may be a natural number. Accordingly, one subframe may consist of one or more slots.

FIG. 7 is a conceptual diagram illustrating a first exemplary embodiment of a slot in a communication system.

As shown in FIG. 7, one slot may include one or more symbols. For example, one slot shown in FIG. 7 may include 14 symbols. The length of slot may vary according to the number of symbols included in a slot and the length of symbol. Alternatively, the length of slot may vary according to a numerology.

The numerology applied to physical signals and channels in a communication system may be variable. The numerology may be adjusted to meet various technical requirements of the communication system. In a communication system where a cyclic prefix (CP)-based OFDM waveform technology is applied, the numerology may include a subcarrier spacing and a CP length (or CP type). Table 1 may illustrate a first exemplary embodiment of a method for configuring numerologies for a CP-OFDM-based communication system. Depending on a frequency band in which the communication system operates, at least some of the numerologies in Table 1 may be supported. Additionally, the communication system may support numerologies not listed in Table 1.

[Table 1]

| Subcarrier spacing | 15 kHz | 30 kHz | 60 kHz | 120 kHz | 240 kHz | 480 kHz |
|---|---|---|---|---|---|---|
| OFDM symbol length [$\mu$s] | 66.7 | 33.3 | 16.7 | 8.3 | 4.2 | 2.1 |
| CP length [us] | 4.76 | 2.38 | 1.19 | 0.60 | 0.30 | 0.15 |
| Number of OFDM symbols within 1ms | 14 | 28 | 56 | 112 | 224 | 448 |

When a subcarrier spacing is 15 kHz (e.g. $\mu = 0$), the length of slot may be 1 ms. In this case, one system frame may include 10 slots. When a subcarrier spacing is 30 kHz (e.g. $\mu = 1$), the length of slot may be 0.5 ms. In this case, one system frame may include 20 slots.

When a subcarrier spacing is 60 kHz (e.g. $\mu = 2$), the length of slot may be 0.25 ms. In this case, one system frame may include 40 slots. When a subcarrier spacing is 120 kHz (e.g. $\mu = 3$), the length of slot may be 0.125 ms. In this case, one system frame may include 80 slots. When a subcarrier spacing is 240 kHz (e.g. $\mu = 4$), the length of slot may be 0.0625 ms. In this case, one system frame may include 160 slots.

The symbol may be configured as a downlink (DL) symbol, flexible (FL) symbol, or uplink (UL) symbol. A slot composed of only DL symbols may be referred to as a 'DL slot', a slot composed of only FL symbols may be referred to as a 'FL slot', and a slot composed of only UL symbols may be referred to as a 'UL slot'.

A slot format may be semi-statically configured through higher-layer signaling (e.g. RRC signaling). Information indicating a semi-static slot format may be included in system information, and the semi-static slot format may be configured cell-specifically. Additionally, a semi-static slot format may be further configured for each terminal through terminal-specific higher-layer signaling (e.g. RRC signaling). Flexible symbols in the cell-specific slot format may be overridden to be downlink symbols or uplink symbols through terminal-specific higher-layer signaling. Furthermore, a slot format may be dynamically indicated through physical layer signaling (e.g. slot format indicator (SFI) included in DCI). The semi-statically configured slot format may be overridden by the dynamically indicated slot format. For example, flexible symbols configured semi-statically may be overridden to be downlink symbols or uplink symbols by the SFI.

Reference signals may include Channel State Information-Reference Signal (CSI-RS), Sounding Reference Signal (SRS), Demodulation-Reference Signal (DM-RS), and Phase Tracking-Reference Signal (PT-RS). Channels may include Physical Broadcast Channel (PBCH), Physical Downlink Control Channel (PDCCH), Physical Downlink Shared Channel (PDSCH), Physical Uplink Control Channel (PUCCH), PUSCH (Physical Uplink Shared Channel), PSCCH (Physical Sidelink Control Channel), and PSSCH (Physical Sidelink Shared Channel). In the present disclosure, a control channel may refer to PDCCH, PUCCH, or PSCCH, and a data channel may refer to PDSCH, PUSCH, or PSSCH.

FIG. 8 is a conceptual diagram illustrating a first exemplary embodiment of a time-frequency resource in a communication system.

As shown FIG. 8, a resource composed of one OFDM symbol on the time axis and one subcarrier on the frequency axis may be defined as a 'resource element (RE)'. A resource composed of one OFDM symbol on the time axis and K subcarriers on the frequency axis may be defined as a 'resource element group (REG)'. The REG may include K REs. The REG may be used as a basic unit of resource allocation in the frequency domain. K may be a natural number. For example, K may be 12. N may be a natural number. In the slot shown in FIG.7, N may be 14. N OFDM symbols may be used as a basic unit of resource allocation in the time domain.

In the present disclosure, an RB may refer to a common RB (CRB). Alternatively, an RB may refer to a physical RB (PRB) or a virtual RB (VRB). In a communication system, a CRB may refer to an RB that constitutes a set of contiguous RBs (e.g. a common RB grid) based on a reference frequency (e.g. point A). A carrier and/or bandwidth part may be mapped onto the common RB grid. That is, a carrier and/or bandwidth part may be configured with CRB(s). The RBs or CRBs that constitute a bandwidth part may be referred to as PRBs, and a CRB index may be appropriately converted to a PRB index within the bandwidth part.

Downlink data may be transmitted through a PDSCH. A base station may transmit configuration information (e.g. scheduling information) of the PDSCH to a terminal through a PDCCH. The terminal may obtain the configuration information of the PDSCH by receiving the PDCCH (e.g. Downlink Control Information (DCI)). For example, the configuration information of the PDSCH may include a Modulation Coding Scheme (MCS) used for transmission/reception of the PDSCH, time resource information of the PDSCH, frequency resource information of the PDSCH, and feedback resource information for the PDSCH. The PDSCH may refer to a radio resource where the downlink data is transmitted and received. Alternatively, the PDSCH may refer to the downlink data itself. The PDCCH may refer to a radio resource where the downlink control information (e.g. DCI) is transmitted and received. Alternatively, the PDCCH may refer to the downlink control information itself.

The terminal may perform a monitoring operation for the PDCCH to receive the PDSCH transmitted from the base station. The base station may notify the terminal of configuration information for the PDCCH monitoring operation using a higher-layer message (e.g. Radio Resource Control (RRC) message). The configuration information for the PDCCH monitoring operation may include Control Resource Set (CORESET) information and search space information.

The CORESET information may include PDCCH DMRS information, PDCCH precoding information, and PDCCH occasion information, and the like. A PDCCH DMRS may be a DMRS used for demodulating a PDCCH. A PDCCH occasion refers to a region where a PDCCH may potentially exist, meaning it is a region where DCI can be transmitted. A PDCCH occasion may also be referred to as a PDCCH candidate. The PDCCH occasion information may include time resource information and frequency resource information for the PDCCH occasion. In the time domain, the length of the PDCCH occasion may be indicated in symbol units. In the frequency domain, the size of the PDCCH occasion can be indicated in RB units (e.g. in PRB units or CRB units).

The search space information may include a CORESET identifier (ID) associated with a search space, a periodicity of PDCCH monitoring, and/or an offset of PDCCH monitoring. The periodicity and offset of PDCCH monitoring may each be indicated in slot units. Additionally, the search space information may further include an index of a symbol where the PDCCH monitoring operation starts.

The base station may configure Bandwidth Part(s) (BWP(s)) for downlink communication. The BWP(s) may be configured differently for each terminal. The base station may notify the terminal of BWP configuration information using higher-layer signaling. The higher-layer signaling may refer to a transmission operation of system information and/or a transmission operation of RRC message(s). The number of BWPs configured for a single terminal may be one or more. The terminal may receive the BWP configuration information from the base station and identify the configured BWP(s) based on the received configuration information. When multiple BWPs are configured for downlink communication, the base station may activate one or more BWPs from among the multiple BWPs. The base station may transmit configuration information of the activated BWP(s) to the terminal using at least one of higher-layer signaling, Medium Access Control (MAC) Control Element (CE), or DCI. The base station may perform downlink communication using the activated BWP(s).

The terminal may identify the activated BWP(s) by receiving the configuration information from the base station and perform downlink reception operations on the activated BWP(s).

In 5G NR, a multiple transmission and reception point (MTRP) technique refers to a technique in which a base station (e.g. gNB) communicates with a terminal by utilizing multiple transmission reception points (TRPs) that are physically separated. The MTRP technique can address issues such as degradation of service quality (Quality-of-Service, QoS) experienced by terminals located at positions far from the base station, such as at a cell edge, and inter-cell interference caused by signals received from base stations located in different cells. Furthermore, the MTRP technique can provide an additional communication path for terminals located in non-line-of-sight (NLOS) paths, such as in a millimeter-wave band.

According to the current 5G NR technical specifications, the MTRP technique is classified into a coherent joint transmission (CJT) scheme and a non-coherent joint transmission (NCJT) scheme. In the CJT scheme, TRPs may cooperate with each other in a synchronized manner to support a terminal. In contrast, in the NCJT scheme, multiple TRPs support a terminal without cooperation between the TRPs in determining scheduling, precoding matrix, modulation, and coding scheme.

When a terminal receives signals from multiple TRPs or transmits signals to multiple TRPs, not only a high transmission rate can be achieved, but also a communication reliability can be improved. However, when a terminal communicates with multiple TRPs, a problem may arise in which a signal arrival time varies for each communication link between the terminal and each TRP.

When considering communication between a base station and a terminal, the base station determines a timing advance (TA) value for synchronization of uplink communication from the terminal. The base station may set the TA value based on a delay required for communication with the terminal and may provide the set TA value to the terminal. Accordingly, the terminal transmits an uplink signal in advance by the TA value assigned by the base station, thereby compensating for a propagation delay between the base station and the terminal.

In a multi-TRP environment, the terminal may communicate with two or more TRPs. In this case, distances between the terminal and the respective TRPs may be different. In other words, a propagation delay between the terminal and each TRP may be different. However, since the 5G NR technical specifications define only a single TA for a terminal, the terminal needs to transmit signals to all TRPs using the single TA. In this case, the TA value for uplink transmission from the terminal to a specific TRP may be appropriate, but the TA value may not be appropriate for uplink transmission to other TRPs. In other words, signals transmitted by the terminal to multiple TRPs at the same time may cause interference with signals received from different TRPs at the base station due to differences in propagation delays. That is, from the perspective of the base station, inter-symbol interference (ISI) may occur due to a propagation delay difference in signals transmitted by the same terminal to different TRPs.

The ISI refers to a phenomenon in which one symbol affects another symbol due to a time delay caused by multipath fading. This may occur when a delay of an orthogonal frequency division multiplexing (OFDM) signal transmitted by the terminal exceeds a cyclic prefix (CP) length of the OFDM signal, causing interference in signals received at the base station.

According to the technical specifications of LTE TS 36.213 and 5G NR TS 38.213, in a coordinated multipoint (CoMP) environment, a TA is defined based on a primary cell (PCell) among cells with which the terminal communicates. This issue is addressed by ensuring that the terminal does not communicate with a cell where a signal transmitted by the terminal based on the defined TA arrives outside the expected symbol timing.

However, in 5G NR or 6G communication systems, a wider variety of frequency bands are expected to be used compared to the conventional 5G NR, including an unlicensed millimeter-wave band and a terahertz band. Accordingly, a more flexible numerology, subcarrier spacing (SCS), and CP are expected to be utilized. In general, as higher frequency bands are used, wider SCS and shorter CP lengths are assigned. Therefore, when a terminal selects TRP(s) for communication based on a TA, SCS, and CP assigned by a reference TRP, as in the current 5G NR, the number of TRPs available for communication may become limited. Furthermore, in an MTRP environment, when TRPs that do not meet condition(s) according to the current technical specifications are excluded from communication, a problem of reduced transmission rate arises.

Therefore, in a 6G terahertz communication system, which requires a high transmission rate, ultra-low latency, and highly reliable communication, the existing method of selecting a reference TRP and requiring all TRPs to utilize the same TA, SCS, and CP as the reference TRP is not suitable. Thus, it is necessary to define a communication TRP selection method, a resource allocation scheme, and parameters required therefor, that consider propagation delays of multiple TRPs available for communication with the terminal.

Before describing methods according to the present disclosure, an overview of timing adjustment-related techniques described in the 3GPP technical specifications is provided.

The section 4.2.3 of 3GPP technical specification TS 36.213 describes transmission timing adjustments. A general overview is as follows.

When a timing advance command or a timing adjustment indication for a timing advance group (TAG) that includes a primary cell or a PSCell is received, a UE may adjust an uplink transmission timing of a PUCCH, PUSCH, and SRS for the primary cell or PSCell based on the received timing advance command or timing adjustment indication.

An uplink transmission timing of a PUSCH and SRS for a secondary cell is the same as that of the primary cell when the secondary cell and the primary cell belong to the same TAG. When the primary cell within the TAG uses a frame structure type 1 and the secondary cell within the same TAG uses a frame structure type 2 or a frame structure type 3, the UE may assume that $N_{TA} \geq 624$.

When the UE is configured with an SCG, an uplink transmission timing of a PUSCH and SRS for a secondary cell that is not the PSCell is the same as that of the PSCell if the secondary cell and the PSCell belong to the same TAG.

When a timing advance command or a timing adjustment indication for a TAG that does not include the primary cell or PSCell is received, and all serving cells within the TAG use the same frame structure type, the UE may need to adjust uplink transmission timings for PUSCHs and SRSs of all secondary cells within the TAG based on the received same timing advance command, or adjust the uplink transmission times for PUSCHs and SRSs of all secondary cells within the TAG based on the received same timing adjustment indication.

When a timing advance command or a timing adjustment indication for a TAG that does not include the primary cell or PSCell is received, if a serving cell within the TAG uses a different frame structure type compared to other serving cells within the same TAG, the UE may need to adjust uplink transmission timings for PUSCHs and SRSs of all secondary cells within the TAG using $N_{TAoffset} = 624$, regardless of the frame structure types of the serving cells, based on the received timing advance command or timing adjustment indication. Here, the uplink transmission timings for the PUSCHs and SRSs are the same for all secondary cells within the TAG.

Methods for determining a TA value subsequently are described, but the detailed content is omitted.

Furthermore, the section 4.2 of 3GPP TS 38.213 describes transmission timing adjustments as follows. A general overview is provided below.

The UE may be provided with a $N_{TA,offset}$ value that is a timing advance offset for a serving cell through *n-TimingAdvanceOffset* for the serving cell. If the UE does not receive *n-TimingAdvanceOffset* for the serving cell, the UE may determine a default $N_{TA,offset}$ value to be a timing advance offset for the serving cell as described in 3GPP TS 38.133.

When the UE is configured with two uplink carriers for the serving cell, the same timing advance offset value, $N_{TA,offset}$, is applied to both carriers.

When a timing advance command for a TAG is received, the UE may adjusts uplink transmission timings for PUSCHs, SRSs, and PUCCHs of all serving cells within the TAG based on the received timing advance command and $N_{TA,offset}$, which is expected to be the same for all serving cells within the TAG. Here, the uplink transmission timings for PUSCHs, SRSs, and PUCCHs are the same for all serving cells within the TAG.

As the details disclosed in the TS documents may be referenced in the corresponding technical specifications, the further content is omitted.

The 5G NR supports communication procedures utilizing MTRPs to improve the performance and efficiency of MIMO. In the MTRP technique, selection between CJT and NCJT schemes may be determined based on an environment of a cell where TRPs are located and a backhaul link connectivity. The selection between these two schemes may determine whether multiple TRPs cooperate to support a terminal in the CJT scheme or whether each TRP independently supports a terminal in the NCJT scheme. Various issues arising from simultaneous communication between multiple TRPs and a terminal in the MTRP environment have been discussed, among which the issue of ISI occurring at TRPs with relatively large propagation delays due to differences in propagation delays between the terminal and the respective TRPs may arise. In the currently proposed 5G NR, this issue is addressed by configuring the terminal to communicate using a TA that corresponds to the propagation delay of the reference TRP. Additionally, the terminal is prevented from communicating with TRPs where its transmitted signal does not arrive within the CP length when using the corresponding TA.

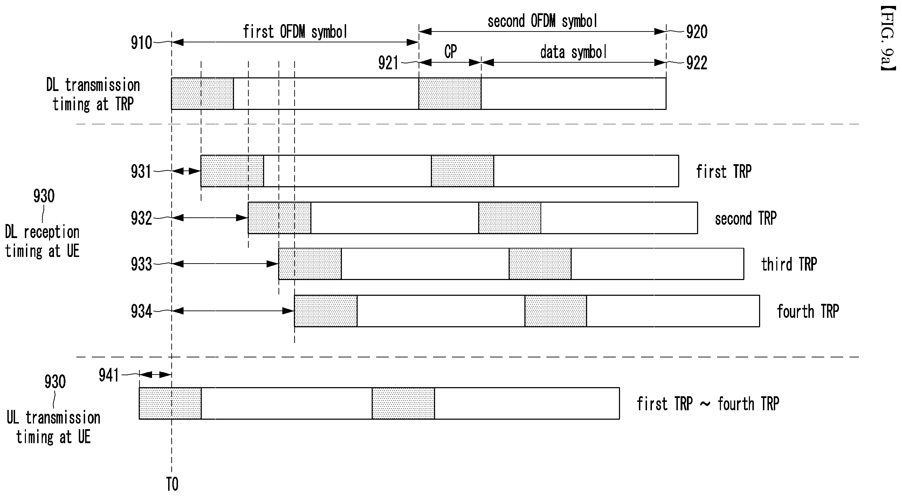

FIG. 9A is a conceptual diagram illustrating a downlink reception timing and an uplink transmission timing based on reference TRP and TA configuration according to the current NR technical specifications in a 5G NR MTRP environment.

FIG. 9A illustrates a case where four TRPs are available for communication with a UE, and these TRPs are described as a first TRP, a second TRP, a third TRP, and a fourth TRP. In this case, a reference TRP is assumed to be the first TRP. Here, the reference TRP may refer to a TRP for which a TA value for UL communication of the UE is set. Generally, the reference TRP may be a TRP with the best channel condition for the UE. The TRP with the best channel condition may be a TRP closest to the UE. For convenience of description, FIG. 9A assumes a scenario in which the distance from the UE to each TRP increases sequentially from the first TRP to the fourth TRP. In other words, the distance between the UE and the first TRP is the shortest, while the distance between the UE and the fourth TRP is the longest. Each of the first TRP to the fourth TRP illustrated in FIG. 9A may be a TRP that can communicate with the UE.

Each of the first TRP to the fourth TRP may transmit a first OFDM symbol 910 at a time T0, which is set as a reference time, and sequentially transmit a second OFDM symbol 920. The OFDM symbols transmitted from the TRP may have the same form. For example, as is widely known, the second OFDM symbol 920 may be composed of a CP 921 and a data symbol 922.

When all four TRPs transmit OFDM symbols to the UE at the time T0, a time at which the UE receives DL data from each TRP may vary depending on the distance between the UE and each TRP. In other words, based on the distance between the UE and each TRP, the UE may receive the OFDM symbol transmitted by each TRP with a different propagation delay. Assuming that the reference TRP is the first TRP in FIG. 9A, reception delays of the OFDM symbols from the respective TRPs are described.

When the first TRP to the fourth TRP transmit OFDM symbols with the same CP length, according to a DL reception timing 930 at the UE, the UE may receive the OFDM symbol, which is transmitted by the first TRP at the time T0, after a delay of a first propagation delay time 931. Additionally, the UE may receive the OFDM symbol, which is transmitted by the second TRP at the time T0, after a delay of a second propagation delay time 932. Similarly, the UE may receive the OFDM symbol, which is transmitted by the third TRP at the time T0, after a third propagation delay time 933, and the OFDM symbol, which is transmitted by the fourth TRP at the time T0, after a fourth propagation delay time 934. In the following description, the first propagation delay time 931 is referred to as $\tau_{TRP1}$, the second propagation delay time 932 is referred to as $\tau_{TRP2}$, the third propagation delay time 933 is referred to as $\tau_{TRP3}$, and the fourth propagation delay time 934 is referred to as $\tau_{TRP4}$.

As described above, in 5G NR, a TA value is determined as a single value based on the reference TRP. In other words, according to the 5G NR technical specifications, a single TA value may be set based on the distance between the first TRP and the UE. Therefore, TA values for the first TRP to the fourth TRP may be determined based on the first propagation delay time 931 of $\tau_{TRP1}$. The TA value may be determined based on $N_{TA,offset}$, a timing advance offset for a serving cell, which is set by *n-TimingAdvanceOffset* signaled from the serving cell, as described above. The same TA value may be set for the respective TRPs.

When the same TA value based on the first propagation delay time 931 is set for the first TRP to the fourth TRP as described above, the uplink transmission may occur at a time earlier than T0 by the TA value 941, as shown in 'UL transmission timing 940 at the UE.

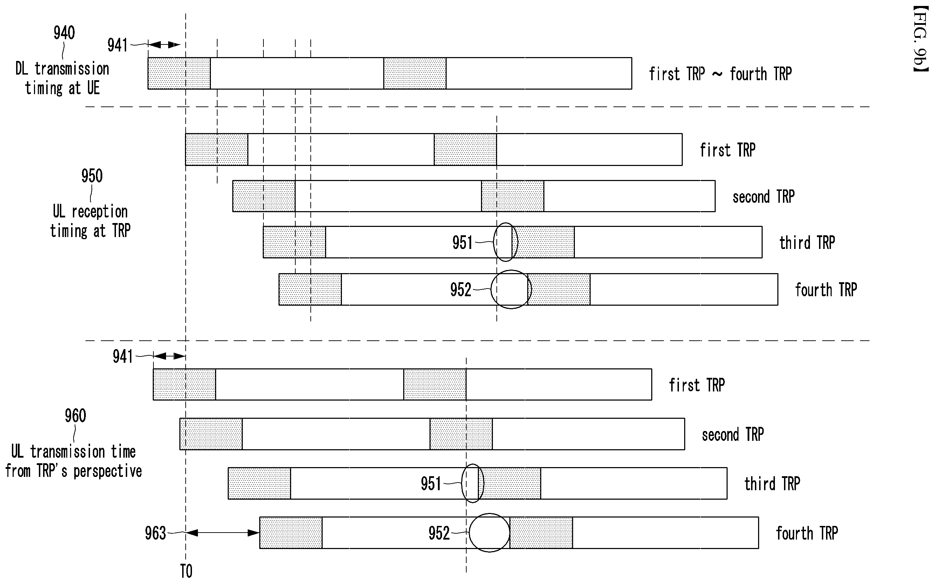

FIG. 9B is a conceptual diagram illustrating an uplink transmission timing and an expected uplink transmission timing based on reference TRP and TA configuration according to the current NR technical specifications in a 5G NR MTRP environment.

As described with reference to FIG. 9A, the UL transmission timing 940 at the UE may be determined based on the first propagation delay time 931 of the reference TRP, which is the first TRP. Therefore, a UL reception timing 950 at each TRP may differ for each TRP. This assumes the same scenario as in FIG. 9A, where the distance between the UE and the first TRP is the shortest, and the distance increases in the order of the second TRP, third TRP, and fourth TRP. In this case, since the first TRP is the reference TRP and the TA value is determined based on the first propagation delay time 931 between the first TRP and the UE, in an ideal case, the OFDM symbol transmitted by the UE may be received at the reference time T0.

However, each of the second TRP to the fourth TRP may receive the signal at a time later than T0 that is the reference time, depending on the distance. When the second TRP receives the first OFDM symbol from the UE and subsequently receives the second OFDM symbol, the second TRP may receive the second OFDM symbol within a CP duration of the second OFDM symbol of the first TRP. However, in the case of the third TRP and the fourth TRP, the first OFDM symbol may be received even after the CP duration of the second OFDM symbol of the first TRP. Accordingly, in the case of the third TRP, the data symbol of the second OFDM symbol of the first TRP is received within a reception interval of the first OFDM symbol, causing an ISI occurrence duration 951. An ISI occurrence duration 952 may also occur in the case of the fourth TRP.

From the perspective of each TRP, a UL transmission timing 960 at the UE appears as follows. From the perspective of the first TRP, the UE transmits the OFDM symbol earlier by the TA 941. From the perspective of the second TRP, the UE transmits the OFDM symbol at a time later than the TA 941, but still within the CP duration. However, from the perspective of the third TRP and the fourth TRP, the UE transmits the OFDM symbol significantly later than the TA 941, that is, at a time exceeding the CP duration. Therefore, ISI occurrence durations 951 and 952 may occur in the cases of the third TRP and the fourth TRP.

According to the current LTE and NR technical specifications, as described above, TRPs with relatively large propagation delays, such as the third TRP and the fourth TRP in FIG. 9B, do not proceed with communication with the UE because ISI occurs. According to a scheme provided by the current LTE and NR technical specifications for addressing the ISI issue caused by propagation delay differences, as the reference TRP adopts a numerology with a wider SCS for communication with the UE, the CP length becomes shorter, limiting the number of TRPs available for communication with the UE. In other words, the number of TRPs that can be utilized in the MTRP environment may be restricted.

In future 6G communication systems that utilize a wider variety of frequency bands, such as unlicensed millimeter-wave bands or terahertz bands, more flexible numerologies are expected to be supported. If, in both 5G NR and future 6G communication systems, TRPs are selected and resources are allocated based solely on a propagation delay of a reference TRP, as is currently the case, the number of TRPs that can communicate with the UE may be limited, as described above. The limitation on the number of TRPs may lead to an issue where wireless communication systems, such as 6G, may fail to achieve ultra-high capacity, ultra-low latency, and massive connectivity communication services.

Therefore, the present disclosure proposes a method to maximize the number of communication links with TRPs not only in a 6G communication environment that uses more flexible numerologies than current 5G NR but also in a 5G NR environment where multiple TRPs aim to support a single UE. In other words, the present disclosure proposes methods for selection of TRPs and assignment of numerology, SCS, CP, and TA that allow the UE to establish communication links with as many TRPs as possible. To this end, the present disclosure described below may consider propagation delays of multiple TRPs.

The present disclosure defines a propagation delay threshold that the UE can support in an MTRP environment, thereby enabling selection of TRP(s) available for communication as well as a reference TRP. Additionally, the present disclosure describes a method in which the UE delivers information on propagation delays with TRPs with which the UE can communicate via a backhaul among the TRPs (e.g. in the CJT scheme) or via the UE itself (e.g. in the NCJT scheme).

According to the present disclosure described below, a scenario in which four TRPs (e.g. TRP A, TRP B, TRP C, and TRP D) aim to support a single UE in an MTRP NCJT environment, where TRPs support the UE without cooperation among the TRPs, may be considered. The number of TRPs is not limited to four, and the present disclosure may also apply to cases where three or fewer TRPs or five or more TRPs communicate with the UE. However, for convenience of description, the following description assumes the case in which four TRPs communicate with the UE.

When a total of four TRPs attempt to communicate with the UE, the UE transmits a PRACH preamble to each of all TRPs, and each TRP measures a propagation delay and a reference signal received power (RSRP) of the PRACH preamble transmitted by the terminal. Each TRP transmits information on the measured propagation delay and RSRP values of the PRACH preamble to the terminal. The present disclosure proposes a method in which the terminal selects TRP(s) available for communication and further selects a reference TRP based on the received information, and the reference TRP assigns a numerology, SCS, and CP and a TA of the terminal based on the information on the propagation delays of other TRPs. Since the terminal can support only one numerology, meaning only one SCS, all TRPs connected to the terminal need to be assigned the same numerology, that is, the same SCS and CP. Accordingly, the present disclosure proposes a method in which the reference TRP determines the numerology, SCS, CP, and TA values by considering the communication environment between the terminal and other TRPs so that all TRPs are assigned the same numerology, SCS, CP, and TA.

First, an overview of operations according to the present disclosure described below is provided. As assumed earlier, when a total of four TRPs attempt to communicate with the terminal, the UE may transmit a PRACH preamble to each of all TRPs. In response, each of all TRPs may measure a propagation delay and an RSRP of the PRACH preamble transmitted by the UE. Each of all TRPs may transmit information on the measured propagation delay and RSRP values of the PRACH preamble to the UE. The UE may select TRP(s) available for communication and a reference TRP based on the information received from the TRPs. According to an exemplary embodiment of the present disclosure, the reference TRP may assign a numerology, SCS, and CP, and a TA of the UE based on information on the propagation delays of other TRPs. Since the UE can support only one numerology, meaning only one SCS, all TRPs connected to the UE need to be assigned the same numerology, that is, the same SCS and CP. Accordingly, the present disclosure proposes a method in which the reference TRP determines the numerology, SCS, CP, and TA values by considering the communication environment between the UE and other TRPs so that all TRPs are assigned the same numerology, SCS, CP, and TA.

A procedure according to the present disclosure described below may include steps (1) to (6) proposed below, and methods for performing these steps are described. Steps (1) to (6) described below are as follows.

(1) The UE transmits a PRACH preamble to each of all TRPs with which the UE attempts to communicate, and each of all TRPs measures a propagation delay and an RSRP of the PRACH preamble.

(2) Each of all TRPs transmits information on the propagation delay and RSRP of the PRACH preamble transmitted by the UE to the UE.

(3) The UE selects TRP(s) for communication and a reference TRP based on the propagation delays and RSRPs received from all TRPs.

(4) The UE delivers information on the propagation delays of the selected communication TRP(s) to the reference TRP.

(5) The reference TRP sets a TA value to be assigned to the UE and numerology, SCS, and CP values to be used by all TRPs based on information on the propagation delays of all selected TRP(s).

(6) In both CJT and NCJT environments, the reference TRP delivers the TA value to the UE and delivers, to the selected other TRPs, information on the numerology, SCS, and CP values to be assigned to each selected TRP.

Steps (1) to (6) described above may all be performed, or some steps may be omitted. Additionally, steps (1) to (6) may be appropriately modified or adjusted based on schemes described below.

Furthermore, while performing steps (1) to (6) above, if the TRPs operate in the CJT environment, the TRPs may exchange information via a backhaul. If the TRPs operate in the NCJT environment, the UE may relay the information.

Even in the NCJT environment, a backhaul may be optionally formed, enabling information exchange between the TRPs in certain cases.

In the present disclosure described below, a transmission scheme may vary depending on whether the reference TRP and other communication TRPs that are not the reference TRP are connected to the same base station or different base stations. If the reference TRP and other communication TRPs that are not the reference TRP are connected to the same base station, both the reference TRP and the communication TRPs that are not the reference TRP may utilize a radio resource control (RRC) transmission scheme. On the other hand, if the reference TRP and other communication TRPs that are not the reference TRP are connected to different base stations, since the UE can establish an RRC connection with only one base station, assuming that the UE is in an RRC-connected state with the base station connected to the reference TRP, the UE may be considered as being in a multi-connectivity state with the base station connected to the communication TRPs that are not the reference TRP through a signaling radio bearer 3 (SRB3). The UE and the base station connected to the communication TRPs that are not the reference TRP may transmit and receive information such as secondary node (SN) RRC reconfiguration, SN RRC reconfiguration complete, SN measurement report, and SN UE assistance information through the SRB3.

## [A] Procedure for selecting communication TRPs and a reference TRP in an MTRP environment

The present disclosure describes a resource allocation method considering propagation delays in an MTRP environment where four TRPs (e.g. TRP A, TRP B, TRP C, and TRP D) attempt to support a single UE. As described earlier, if a propagation delay between the UE and a TRP exceeds a CP length of an OFDM symbol used for communication by the UE, a signal transmitted by the UE may overlap with another OFDM symbol, causing ISI. The present disclosure first describes a procedure for the UE to select TRPs for communication and a reference TRP. Specifically, the UE may define a propagation delay based on a numerology supportable by itself and may select TRPs for communication and a reference TRP based on propagation delays and RSRP values received from the respective TRPs.

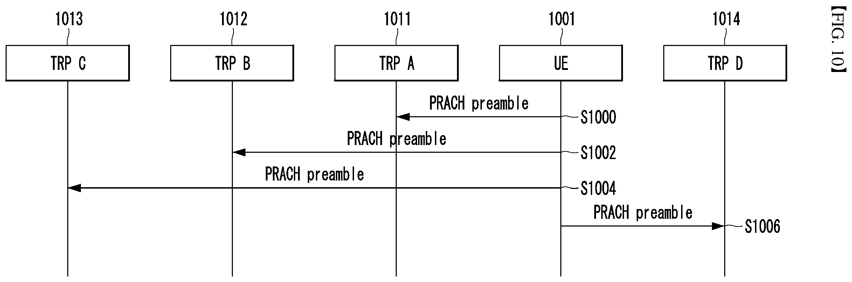

FIG. 10 is a sequence chart illustrating a procedure in which a UE transmits a PRACH preamble to multiple TRPs.

FIG. 10 illustrates a UE 1001 and four different TRPs 1011, 1012, 1013, and 1014 as entities performing operations of FIG. 10. As described above, multiple TRPs may include two or more TRPs, and it should be noted that four TRPs are illustrated merely for convenience of description. Each of the UE 1001 and TRPs 1011, 1012, 1013, and 1014 may include at least a part of the components exemplified in FIG. 2. Additionally, when the MIMO scheme is applied, at least a part of the components in FIG. 3 may be included. When assuming a system that transmits OFDM symbols, at least a part of the components in FIG. 4A and/or FIG. 4B may be included. Each of the UE 1001 and TRPs 1011, 1012, 1013, and 1014 may also include additional components beyond those exemplified in FIG. 2 to FIG. 4B. For example, the UE 1001 may further include an interface for user convenience and/or various types of sensors. Additionally, each of the TRPs 1011, 1012, 1013, and 1014 may further include an interface for a backhaul link depending on a configuration scheme. If the TRPs 1011, 1012, 1013, and 1014 are configured based on the O-RAN technical specifications, they may include only components defined by the O-RAN technical specifications.

Before referring to FIG. 10, it is assumed that the UE 1001 has received synchronization signal blocks (SSBs) from all TRPs 1011, 1012, 1013, and 1014. Therefore, the UE 1001 may be aware of all TRP(s) with which communication is possible.

As shown in FIG. 10, in step S1000, the UE 1001 may transmit a PRACH preamble to the TRP A 1011. When the UE 1001 transmits the PRACH preamble to the TRP A 1011, the UE 1001 may be aware of a RACH occasion of the TRP A 1011. In addition, in step S1002, the UE 1001 may transmit a PRACH preamble to the TRP B 1012. When the UE 1001 transmits the PRACH preamble to the TRP B 1012, the UE 1001 may be aware of a RACH occasion of the TRP B 1012. In the same manner, in step S1004, the UE 1001 may transmit a PRACH preamble to the TRP C 1013, and in step S1006, the UE 1001 may transmit a PRACH preamble to the TRP D 1014. Therefore, when the UE 1001 transmits the PRACH preambles to the TRP C 1013 and TRP D 1014, the UE 1001 may be aware of RACH occasions of the TRP C 1013 and TRP D 1014.

The RACH occasions of the TRPs 1011, 1012, 1013, and 1014 may be the same time. The UE 1001 may configure different RACH occasions for the TRPs 1011, 1012, 1013, and 1014 to prevent preamble collisions among the TRPs 1011, 1012, 1013, and 1014. For example, a different RACH occasion for each TRP may be configured by utilizing an identifier (ID) of each TRP.

As another example, when the UE 1001 can utilize multiple panels, that is, when the UE 1001 has multiple panels and can use them, the UE 1001 may allocate different panels to the TRPs to distinguish preambles among the TRPs 1011, 1012, 1013, and 1014 based on the respective panels. More specifically, when the UE 1001 has multiple panels, the UE 1001 may prevent PRACH preamble collisions among the TRPs by utilizing orthogonality among the panels through a method of separately setting a preamble index for each panel. In this case, steps S1000 to S1006 may be performed simultaneously.

In addition, the UE 1001 may transmit the PRACH preamble corresponding to each TRP. For example, the UE 1001 may transmit a UE PRACH preamble A to the TRP A 1011, a UE PRACH preamble B to the TRP B 1012, a UE PRACH preamble C to the TRP C 1013, and a UE PRACH preamble D to the TRP D 1014. In this case, the RACH procedure may be performed according to a two-step procedure or a four-step procedure. When the RACH procedure is a four-step procedure, the UE PRACH preambles may be transmitted in the form of 'Message 1 (Msg1)', and when the RACH procedure is a two-step procedure, the UE PRACH preambles may be transmitted in the form of 'Message A (MsgA)'.

Accordingly, in step S1000, the TRP A 1011 may receive the PRACH preamble from the UE 1001, in step S1002, the TRP B 1012 may receive the PRACH preamble from the UE 1001, in step S1004, the TRP C 1013 may receive the PRACH preamble from the UE 1001, and in step S1006, the TRP D 1014 may receive the PRACH preamble from the UE 1001.

In step S1000, the TRP A 1011 may measure the PRACH preamble received from the UE 1001. The measurement of the PRACH preamble may include measuring a propagation delay of the PRACH preamble and an RSRP value of the PRACH preamble. In addition, in step S1002, the TRP B 1012 may measure a propagation delay of the PRACH preamble received from the UE 1001 and an RSRP value of the PRACH preamble. In the same manner, in step S1004, the TRP C 1013 may measure a propagation delay and an RSRP value of the PRACH preamble received from the UE 1001, and in step S1006, the TRP D 1014 may measure a propagation delay and an RSRP value of the PRACH preamble received from the UE 1001. When the propagation delays and RSRP values measured at the TRP A 1011 to TRP D 1014 are shown in a table, an example may be given as shown in Table 2 below.

[Table 2]

|  | Propagation delay | RSRP value |
|---|---|---|
| UE PRACH preamble A | PD_A | RSRP_95 |
| UE PRACH preamble B | PD_B | RSRP_90 |
| UE PRACH preamble C | PD_C | RSRP_85 |
| UE PRACH preamble D | PD_D | RSRP_89 |

In Table 2, the PRACH preamble transmitted by the UE 1001 to the TRP A 1011 is the UE PRACH preamble A. Therefore, the propagation delay measured at the TRP A 1011 after receiving the UE PRACH preamble A may be represented as PD_A, and the RSRP value of the UE PRACH preamble A may be RSRP_95. In Table 2, the PRACH preamble transmitted by the UE 1001 to the TRP B 1012 is the UE PRACH preamble B, and the propagation delay measured at the TRP B 1012 after receiving the UE PRACH preamble B may be represented as PD_B, while the RSRP value of the UE PRACH preamble B may be RSRP_90. In addition, in Table 2, the PRACH preamble transmitted by the UE 1001 to the TRP C 1013 is the UE PRACH preamble C, and the propagation delay measured at the TRP C 1013 after receiving the UE PRACH preamble C may be represented as PD_C, while the RSRP value of the UE PRACH preamble C may be RSRP_85. In the same manner, in Table 2, the PRACH preamble transmitted by the UE 1001 to the TRP D 1014 is the UE PRACH preamble D, and the propagation delay measured at the TRP D 1014 after receiving the UE PRACH preamble D may be represented as PD_D, while the RSRP value of the UE PRACH preamble D may be RSRP_89.

Through the procedure of FIG. 10 described above, each of the TRPs 1011, 1012, 1013, and 1014 that can communicate with the UE 1001 may obtain the propagation delay and RSRP value using the UE PRACH preamble transmitted by the UE 1001. Hereinafter, a procedure in which each of the TRPs 1011, 1012, 1013, and 1014 delivers the values (or information) obtained for the UE 1001 will be described.

Meanwhile, when the PRACH preamble is received at each of the TRPs 1011 to 1014, each TRP may notify a base station to which itself is connected of the reception of the PRACH preamble.

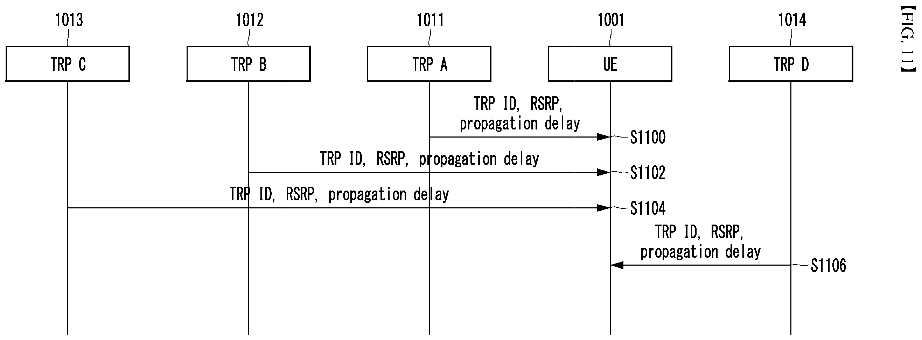

FIG. 11 is a sequence chart illustrating a case in which a plurality of TRPs provide propagation delays and RSRP values to a UE.

FIG. 11 illustrates the UE 1001 and four different TRPs 1011, 1012, 1013, and 1014 as entities performing operations of FIG. 11. In FIG. 11, the UE 1001 and TRPs 1011, 1012, 1013, and 1014 use the same reference numerals as described in FIG. 10. In other words, the configurations of the UE 1001 and TRPs 1011, 1012, 1013, and 1014, which are the entities performing operations in FIG. 11, may be the same as those described in FIG. 10. In addition, the UE 1001 and TRPs 1011, 1012, 1013, and 1014, which are the entities performing operations in FIG. 11, may be in a state where the operations of FIG. 10 have been performed in advance.

As shown in FIG. 11, in step S1100, the TRP A 1011 may transmit information on its TRP ID, RSRP value, and propagation delay to the UE 1001. Here, the TRP ID may be TRP ID_A, which is the ID of the TRP A 1011. In addition, the information on the RSRP value and propagation delay, which is transmitted by the TRP A 1011 in step S1100, may be the information obtained in the procedure of FIG. 10. In other words, the RSRP value transmitted by the TRP A 1011 may be RSRP_95, and the propagation delay may be PD_A, as exemplified in Table 2. Therefore, the UE 1001 may receive the information on the TRP ID, RSRP, and propagation delay from the TRP A 1011.

In step S1102, the TRP B 1012 may transmit information on its TRP ID, RSRP value, and propagation delay to the UE 1001. Here, the TRP ID may be TRP ID_B, which is the ID of the TRP B 1012. In addition, the information on the RSRP value and propagation delay, which is transmitted by the TRP B 1012 in step S1102, may be the information obtained in the procedure of FIG. 10. For example, the RSRP value transmitted by the TRP B 1012 may be RSRP_90, and the propagation delay may be PD_B, as exemplified in Table 2. Therefore, the UE 1001 may receive the information on the TRP ID, RSRP, and propagation delay from the TRP B 1012.

In addition, in step S1104, the TRP C 1013 may transmit information on its TRP ID, RSRP, and propagation delay to the UE 1001. Here, the TRP ID may be TRP ID_C, which is the ID of the TRP C 1013. In addition, the information on the RSRP and propagation delay, which is transmitted by the TRP C 1013 in step S1104, may be the information obtained in the procedure of FIG. 10. For example, the RSRP value transmitted by the TRP C 1013 may be RSRP_85, and the propagation delay may be PD_C, as exemplified in Table 2. Therefore, the UE 1001 may receive the information on the TRP ID, RSRP, and propagation delay from the TRP C 1013.

In the same manner, in step S1106, the TRP D 1014 may transmit information on its TRP ID, RSRP, and propagation delay to the UE 1001. Here, the TRP ID may be TRP ID_D, which is the ID of the TRP D 1014. In addition, the information on the RSRP and propagation delay, which is transmitted by the TRP D 1014 in step S1106, may be the information obtained in the procedure of FIG. 10. For example, the RSRP value transmitted by the TRP D 1014 may be RSRP_89, and the propagation delay may be PD_D, as exemplified in Table 2. Therefore, the UE 1001 may receive the information on the TRP ID, RSRP, and propagation delay from the TRP D 1014.

Based on the description above, an example of the information transmitted by each of the TRPs 1011, 1012, 1013, and 1014 to the UE 1001 may be provided as shown in Table 3 below.

[Table 3]

|  | Delivered information (TRP ID, propagation delay, RSRP value) |
|---|---|
| TRP A → UE | TRP ID_A, PD_A, RSRP_95 |
| TRP B → UE | TRP ID_B & PD_B & RSRP_90 |
| TRP C → UE | TRP ID_C & PD_C & RSRP_85 |
| TRP D → UE | TRP ID_D & PD_D & RSRP_89 |

Meanwhile, the TRP ID may be omitted in each of steps S1100 to S1106. The TRP ID may be omitted when the UE 1001 has already acquired the IDs of all TRPs 1011, 1012, 1013, and 1014 through SSBs respectively received from the TRPs 1011, 1012, 1013, and 1014. In another example, even when the UE 1001 has already acquired the IDs of all TRPs 1011, 1012, 1013, and 1014 through the SSBs, the TRP ID may still be included to allow the UE 1001 to identify from which TRP the delivered information on the RSRP and propagation delay is received.

In yet another example, the TRP ID may be omitted when the UE 1001 can identify each of the TRPs 1011, 1012, 1013, and 1014 by pairing or linking UE PRACH preambles with transmission beams and reception beams or by matching the panels to the TRPs.

The transmission of the RSRP value and propagation delay from each of the TRPs 1011, 1012, 1013, and 1014 to the UE 1001 may be performed via base station(s) connected to the TRPs 1011, 1012, 1013, and 1014.

The UE 1001 may comprehensively utilize the TRP IDs and the propagation delays and RSRP values of the PRACH preambles for all the TRPs 1011, 1012, 1013, and 1014, obtained through the procedure of FIG. 11, to select TRPs for communication and further select a reference TRP in a subsequent process. A more detailed description of this will be provided with reference to subsequent drawings.

In the procedure of FIG. 11, when the UE 1001 is in an RRC-connected state with a base station connected to a TRP with which communication is intended, the corresponding TRP may transmit information on its TRP ID and the propagation delay and RSRP value of the PRACH preamble to the UE 1001 through an SIB, downlink control information (DCI), or MAC-CE. In another example, since the UE 1001 has already transmitted the UE PRACH preamble through Msg1 or MsgA in the procedure of FIG. 10, the UE 1001 may receive information on the TRP ID and the propagation delay and RSRP value of the PRACH preamble from the corresponding TRP through Msg2 or MsgB. In yet another example, when the UE 1001 is in the RRC-connected state with the base station connected to the TRP, the UE 1001 may receive information on the TRP ID and the propagation delay and RSRP value of the PRACH preamble through a new RRC signaling. Additionally, when the base station in the RRC-connected state with the UE 1001 provides the UE 1001 with information on an instruction to report the communication TRP(s) and the reference TRP, the base station may transmit such information to the UE 1001 through a UE information request in RRC signaling.

When the TRP is connected to a base station other than the base station with which the UE 1001 is in the RRC-connected state, the TRP may transmit information on the TRP ID and the propagation delay and RSRP value of the PRACH preamble to the UE 1001 through SRB3 signaling. In another example, when the TRP is connected to a base station other than the base station with which the UE 1001 is in the RRC-connected state, the TRP may transmit information on the TRP ID and the propagation delay and RSRP value of the PRACH preamble to the UE 1001 through an SIB or DCI.

In the procedures of FIGS. 10 and 11 described above, the case has been described in which the UE 1001 transmits a PRACH preamble to each of the TRPs 1011, 1012, 1013, and 1014 and receives information on the TRP ID and the propagation delay and RSRP value of the PRACH preamble from each of the TRPs 1011, 1012, 1013, and 1014 through a response such as Msg2 or MsgB, or through various types of signaling. However, the procedure in which the UE 1001 receives information on the TRP ID and the propagation delay and RSRP value of the PRACH preamble from each of the TRPs 1011, 1012, 1013, and 1014 may also be performed using other schemes. For example, the UE 1001 may obtain the RSRP value through a procedure in which the UE 1001 receives an SSB broadcasted by each of the TRPs 1011, 1012, 1013, and 1014 and measures an RSRP of the received SSB for each of the TRPs 1011, 1012, 1013, and 1014.

Additionally, the present disclosure considers an environment with minimal delay spread in anticipation of a future 6G environment. However, in an environment with significant multipath propagation, all TRPs may additionally transmit information on their respective delay spreads to the UE along with the information on the TRP IDs, propagation delays, and RSRPs.

The procedure of FIG. 11 described above does not take into account collision scenarios between UEs, that is, preamble collisions in a contention-based random access procedure. However, the present disclosure may further include a procedure in which, when the preamble transmitted by the UE collides with a preamble transmitted by another UE in the contention-based random access procedure, the preamble is retransmitted once or n times (where n is an integer equal to or greater than 2).

Additionally, when random access is not successfully performed within a predetermined number of attempts due to collisions between UEs, the UE 1001 and/or the corresponding TRP may set a TA value by utilizing a previously obtained propagation delay (i.e. TA value) from the previous operation, even if it may be somewhat inaccurate.

The information related to the TA value described in the present disclosure may be transmitted as the measured propagation delay value itself. In another example, the information related to the TA value described in the present disclosure may be transmitted as a specific index value that matches a TA value quantized based on a predetermined resolution. In this case, the index that matches the TA value may be an index corresponding to a quantized TA value with the smallest error relative to the actual TA value. In another example, the index that matches the TA value may be the smallest value among values greater than the quantized TA value, which are classified based on the resolution. A relationship between the TA value and resolution in the quantization process may be illustrated in a diagram.

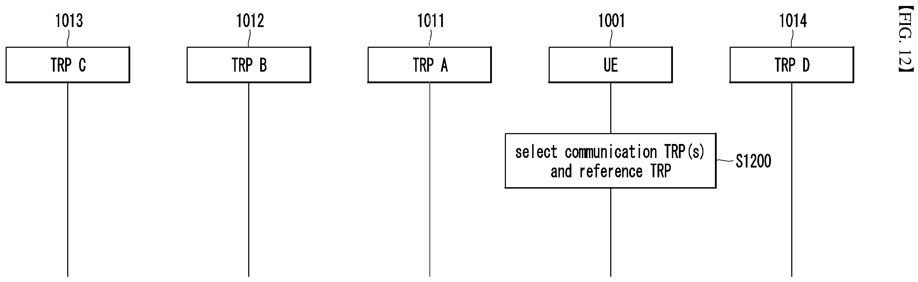

Meanwhile, operations performed at higher layers in the procedure described in FIG. 12, such as operations performed at the MAC layer or the RRC layer, may all be performed under the control of the base station. Therefore, the TRPs 1011, 1012, 1013, and 1014 may perform operations of transmitting or receiving the corresponding information under the control of the base station. Additionally, when necessary, a control entity for all or part of the operations performed at the physical layer may also be the base station(s) connected to the respective TRPs 1011, 1012, 1013, and 1014.

FIG. 12 is a sequence chart illustrating a procedure in which a UE determines communication TRP(s) and a reference TRP.

FIG. 12 illustrates the UE 1001 and four different TRPs 1011, 1012, 1013, and 1014 as entities performing operations of FIG. 12. In FIG. 12, the UE 1001 and TRPs 1011, 1012, 1013, and 1014 use the same reference numerals as described in FIGS. 10 and 11. In other words, the configurations of the UE 1001 and TRPs 1011, 1012, 1013, and 1014, which are the entities performing operations of FIG. 12, may be the same as those described in FIGS. 10 and 11. Additionally, the UE 1001 and TRPs 1011, 1012, 1013, and 1014, which are the entities performing operations of FIG. 12, may be in a state where the operations of FIG. 10 and/or FIG. 11 have been performed in advance. In the following description of the operation of FIG. 12, for convenience of description, it is assumed that the operations of FIG. 10 and/or FIG. 11 have already been performed.

As shown in FIG. 12, in step S1200, the UE 1001 may select TRP(s) for communication (hereinafter referred to as 'communication TRP(s)') and a reference TRP based on the information received from the TRP A 1011, TRP B 1012, TRP C 1013, and TRP D 1014. In other words, the communication TRP(s) and the reference TRP may be determined based on the information on the propagation delays and the RSRP values of the preambles, which is received from the TRPs 1011, 1012, 1013, and 1014. According to Table 3 of FIG. 11, the UE 1001 may be in a state where the TRP ID_A, PD_A, and RSRP_95 have been received from the TRP A 1011, the TRP ID_B, PD_B, and RSRP_90 have been received from the TRP B 1012, the TRP ID_C, PD_C, and RSRP_85 have been received from the TRP C 1013, and the TRP ID_D, PD_D, and RSRP_89 have been received from the TRP D 1014.

In the present disclosure, a propagation delay threshold $PD_{th}$ may be set to determine the communication TRP(s). The propagation delay threshold may represent the maximum allowable propagation delay set by the UE 1001. In other words, the UE 1001 may not perform communication with a TRP that has a propagation delay longer than the propagation delay threshold. Therefore, TRPs with propagation delays exceeding the propagation delay threshold may be excluded from the communication TRPs.

The propagation delay threshold according to the present disclosure may be (pre-)configured through one of two schemes. When the UE 1001 sets the propagation delay threshold autonomously, the UE 1001 may set a CP corresponding to a numerology with the minimum SCS that the UE 1001 supports as the propagation delay threshold. In other words, the propagation delay threshold may be determined based on capability information of the UE 1001.

In another example, the propagation delay threshold may be set by determining the maximum allowable CP according to a latency requirement demanded by the UE 1001 or the higher layer of the UE 1001 and setting the propagation delay threshold based on the determined maximum CP.

When the propagation delay threshold is set by the base station connected to the UE 1001, the base station may determine the maximum allowable CP by considering a latency requirement demanded by the network or frequency bands supportable by the network, and set the propagation delay threshold in accordance with the determined maximum CP. Even in this case, the base station may also consider the capability information of the UE 1001 received from the UE 1001 when determining the propagation delay threshold. When the propagation delay threshold is set, the base station may transmit information on the propagation delay threshold to the UE 1001 via a specific TRP. In this case, the propagation delay threshold may be pre-delivered to the UE 1001 through *MeasConfig* of an RRC reconfiguration message.

An example in which TRPs satisfying the propagation delay threshold for the UE 1001 are determined to be the TRP A 1011, TRP B 1012, and TRP C 1013 based on the propagation delays obtained through the procedures of FIGS. 10 to 11 may be given as shown in Table 4 below.

[Table 4]

| TRP | Propagation delay | RSRP value |
|---|---|---|
| TRP A (TRP ID_A) | $PD\_A < PD_{th}$ | RSRP_95 |
| TRP B (TRP ID_B) | $PD\_B < PD_{th}$ | RSRP_90 |
| TRP C (TRP ID_C) | $PD\_C < PD_{th}$ | RSRP_85 |
| TRP D (TRP ID_D) | $PD_{th} < PD\_D$ | RSRP_89 |

As exemplified in Table 4, the propagation delay PD_D between the TRP D 1014 and the UE 1001 is greater than the propagation delay threshold $PD_{th}$, whereas the propagation delays PD_A, PD_B, and PD_C of the TRP A 1011, TRP B 1012, and TRP C 1013 are less than the propagation delay threshold $PD_{th}$. Therefore, the UE 1001 may determine the TRP A 1011, TRP B 1012, and TRP C 1013 as communication TRPs.

Additionally, when determining the reference TRP, the UE 1001 may select one of the communication TRPs, which are the TRP A 1011, TRP B 1012, and TRP C 1013, as the reference TRP. Various methods may be used to determine the reference TRP. However, since the present disclosure describes the selection process based only on propagation delays and RSRP values, the following description focuses on the method using RSRP values. However, the present disclosure is not limited to using only RSRP values in determining the reference TRP, and other factors, such as TRP loads and required qualities of transmitted data, may also be considered.

The UE 1001 may configure a TRP with the highest RSRP among the communication TRPs (i.e. TRP A 1011, TRP B 1012, and TRP C 1013) as the reference TRP. According to the example in Table 3, the RSRP value received from the TRP A 1011 is RSRP_95, the RSRP value received from the TRP B 1012 is RSRP_90, and the RSRP value received from the TRP C 1013 is RSRP_85. Therefore, the UE 1001 may determine the TRP A 1011, which has the highest RSRP value, as the reference TRP.

In FIG. 12, the procedure has been described in which the propagation delay threshold is set, the communication TRPs are determined based on the propagation delay threshold, and the reference TRP is subsequently determined based on the RSRP values. Conversely, communication TRPs may also be determined using an RSRP threshold, and a reference TRP may then be selected based on propagation delays.

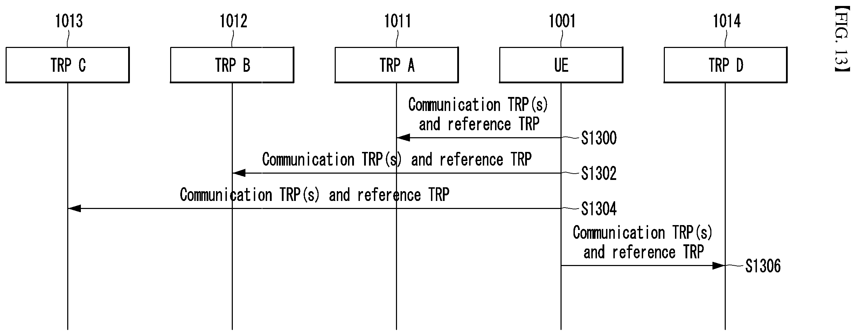

FIG. 13 is a sequence chart illustrating a case in which a UE transmits information on determined communication TRP(s) and reference TRP to all TRPs to which PRACH preambles have been transmitted.

FIG. 13 illustrates the UE 1001 and four different TRPs 1011, 1012, 1013, and 1014 as entities performing operations of FIG. 13. In FIG. 13, the UE 1001 and TRPs 1011, 1012, 1013, and 1014 use the same reference numerals as described in FIGS. 10 to 12. In other words, the configurations of the UE 1001 and TRPs 1011, 1012, 1013, and 1014, which are the entities performing operations of FIG. 13, may be the same as those described in FIGS. 10 to 12. Additionally, the UE 1001 and TRPs 1011, 1012, 1013, and 1014, which are the entities performing operations of FIG. 13, may be in a state where the operations of FIGS. 10 to 12 have been performed in advance. In the following description of the operation of FIG. 13, for convenience of description, it is assumed that the operations of FIGS. 10 to 12 have already been performed, or at least the operations of FIG. 12 have been completed.

As shown in FIG. 13, the UE 1001 may be in a state where the communication TRP(s) and the reference TRP have been determined based on the propagation delays and RSRP values of the PRACH preambles, which are received from all TRPs 1011, 1012, 1013, and 1014, as well as according to specific criteria. Additionally, the procedure in FIG. 13 may not correspond to a procedure in which the network, represented by the TRPs, sets the number of TRPs communicating with the UE, but rather a procedure in which the UE itself selects the communication TRP(s) and the reference TRP from UE's perspective and transmits information on the communication TRP(s) and the reference TRP to all TRPs 1011, 1012, 1013, and 1014 to which the PRACH preambles have been transmitted.

In step S1300, the UE 1001 may transmit information on the communication TRP(s) and the reference TRP determined by the UE 1001 to the TRP A 1011. Here, the information on the communication TRP(s) and the reference TRP may be transmitted using one of uplink control information (UCI), UE assistance information, or SRB3 UE assistance information. In another example, if an RRC message is defined for transmitting the information on the communication TRP(s) and the reference TRP, the information on the communication TRP(s) and the reference TRP may be transmitted through the RRC message. If the UE 1001 receives the UE information request message from the base station requesting the information on the communication TRP(s) and the reference TRP in the procedure of FIG. 11 described earlier, the UE 1001 may transmit the obtained information on the communication TRP(s) and the reference TRP through a UE information response message in response to the UE information request message.

In another example, if a base station to which the TRP A 1011 is connected is not in an RRC-connected state with the UE 1001, the UE 1001 may perform a secondary node addition procedure with the TRP A 1011 and then transmit the information on the communication TRP(s) and the reference TRP determined by the UE 1001 through SRB3 UE assistance information. In this case, if an SRB3 signaling is defined for transmitting the information on the communication TRP(s) and the reference TRP, the information may be transmitted through the SRB3 signaling.

In step S1302, the UE 1001 may transmit the information on the communication TRP(s) and the reference TRP determined by the UE 1001 to the TRP B 1012. In this case, the information on the communication TRP(s) and the reference TRP may be transmitted using one of the methods described in step S1300.

In step S1304, the UE 1001 may transmit the information on the communication TRP(s) and the reference TRP determined by the UE 1001 to the TRP C 1013. Similarly, the information on the communication TRP(s) and the reference TRP may be transmitted using one of the methods described in step S1300.

In the same manner, in step S1306, the UE 1001 may transmit the information on the communication TRP(s) and the reference TRP determined by the UE 1001 to the TRP D 1014. Here, the information on the communication TRP(s) and the reference TRP may be transmitted using one of the methods described in step S1300.

An example of the information transmitted by the UE 1001 to all TRPs 1011, 1012, 1013, and 1014 based on the procedures described above may be provided as shown in Table 5 below.

[Table 5]

| | Delivered information |
|---|---|
| UE → all TRPs (TRP A, B, C, D) | Communication TRP IDs = TRP ID_A, TRP ID_B, TRP ID_C |
| | Reference TRP ID = TRP ID_A |

As exemplified in Table 5, the UE 1001 may transmit information on TRP ID(s) of the communication TRP(s) and an ID of the reference TRP to all TRPs 1011, 1012, 1013, and 1014.

Meanwhile, in the operations shown in FIG. 13, the TRP D 1014 may be a TRP that is not configured as the communication TRP in FIG. 12. In such a case, the UE 1001 may not perform step S1306. In other words, the UE 1001 may not transmit the information on the communication TRP(s) and the reference TRP to the TRP D 1014.

In another example, instead of performing step S1306, the UE 1001 may notify the TRP D 1014 that the TRP D 1014 is not a communication TRP.

When each of the TRPs 1011, 1012, 1013, and 1014 receives the information on the communication TRP(s) and the reference TRP from the UE 1001, each of the TRPs 1011, 1012, 1013, and 1014 may provide the corresponding information to a base station to which it is connected. Additionally, operations performed at higher layers in the procedure described in FIG. 13, such as operations performed at the MAC layer or the RRC layer, may all be performed under the control of the base station. Accordingly, the TRPs 1011, 1012, 1013, and 1014 may perform operations of transmitting or receiving the corresponding information under the control of the base station. Additionally, when necessary, a control entity for all or part of the operations performed at the physical layer may also be the base station(s) connected to the respective TRPs 1011, 1012, 1013, and 1014.

The procedures described in FIGS. 10 to 13 may correspond to the procedures by which the UE 1001 selects TRPs with which the UE 1001 intends to communicate from UE's perspective. Through these procedures, in the 5G NR MTRP environment, it is possible to prevent a limitation in the number of TRPs communicating with the UE that may occur when selecting communication TRPs based on a CP of a numerology assigned to the UE from the TRP's perspective. In other words, according to an exemplary embodiment of the present disclosure, the UE 1001 may determine the communication TRP(s) and the reference TRP based on the propagation delay threshold of the UE 1001 and the propagation delay values received from the respective TRPs. According to another exemplary embodiment of the present disclosure, the UE 1001 may determine the communication TRP(s) and the reference TRP based on the RSRP values received from the respective TRPs in response to the PRACH preambles transmitted by the UE 1001 and the predetermined RSRP threshold.

The procedures described in FIGS. 10 to 13 may serve as a prerequisite procedure for the reference TRP to assign numerology, SCS, CP, and TA values for other communication TRPs, ensuring that the TRPs are assigned a common numerology, SCS, and CP.

Additionally, the present disclosure considers both an intra-cell environment where each TRP is connected to the same base station and an inter-cell environment where each TRP is connected to a different base station. Furthermore, according to the present disclosure, TA configuration may be supported for the RACH procedure only in the intra-cell environment using the methods described in the present disclosure. However, in general RRC-connected states, the methods may support both intra-cell and inter-cell environments regardless of the network structure.

### [B] Propagation delay-based resource allocation method in an MTRP environment

In an MTRP environment, due to differences in propagation delays among multiple TRPs, the number of TRPs with which a single UE can communicate may be limited. The process of selecting a reference TRP from the UE's perspective in consideration of propagation delays between a UE and two or more TRPs has been described above. Hereinafter, a method for assigning numerology, SCS, and CP while considering the propagation delays between the reference TRP, the communication TRP(s), and the UE will be described.

According to the current NR technical specifications, a UE can support only one numerology, that is, a single SCS. Therefore, in order to assign a common numerology, SCS, and CP to all TRPs, the reference TRP may transmit necessary information to allow other communication TRPs to be assigned the same numerology, SCS, CP, and TA values as the reference TRP. In contrast, according to the present disclosure described in FIGS. 10 to 13, through the selection procedure for communication TRPs and a reference TRP in an MTRP environment, a UE may select communication TRPs that can communicate with the UE and may further select a reference TRP among the communication TRPs.

In exemplary embodiments described below, each TRP may obtain information on the reference TRP and communication TRP(s) through the procedure described in section [A]. Therefore, a method and an procedure will be described in which the numerology, SCS, CP, and TA values for the reference TRP are determined according to a specific rule for communication with the UE based on or independently of the procedure described in section [A], the numerology, SCS, CP, and TA values for other communication TRPs are determined, and the determined values are transmitted to other TRPs and/or the UE.

Specifically, the present disclosure described below describes cases in an MTRP environment where information-exchange between TRPs occurs via a backhaul formed between the TRPs or via a backhaul formed between base stations connected to the TRPs. Additionally, cases where no backhaul exists between the TRPs, or where information transmission through a backhaul is not feasible due to various reasons, are also considered.

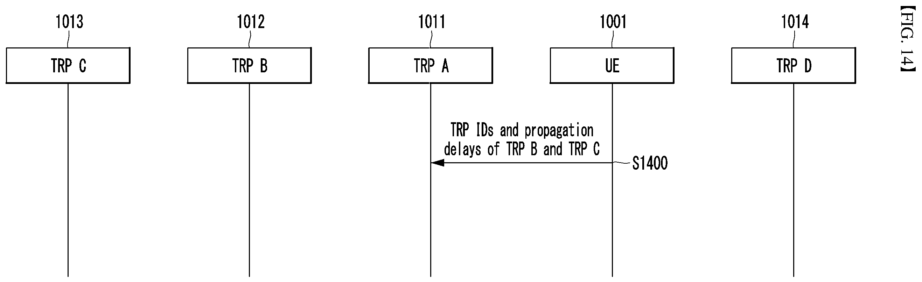

FIG. 14 is a sequence chart illustrating a case in which a UE transmits identifiers and propagation delay values of communication TRPs, excluding a reference TRP, to the reference TRP.

FIG. 14 illustrates the UE 1001 and four different TRPs 1011, 1012, 1013, and 1014 as entities performing operations of FIG. 14. In FIG. 14, the UE 1001 and TRPs 1011, 1012, 1013, and 1014 use the same reference numerals as described in FIGS. 10 to 12. In other words, the configurations of the UE 1001 and TRPs 1011, 1012, 1013, and 1014, which are the entities performing operations of FIG. 14, may be the same as those described in FIGS. 10 to 13. Additionally, the UE 1001 and TRPs 1011, 1012, 1013, and 1014, which are the entities performing operations of FIG. 14, may be in a state where the operations of FIGS. 10 to 13 have been performed in advance. In the following description of the operation of FIG. 14, for convenience of description, it is assumed that the operations of FIGS. 10 to 13 have already been performed, or at least the operations of FIG. 13 have been completed.

In step S1400, the UE 1001 may transmit information on the IDs of the communication TRPs, excluding the reference TRP, and the propagation delays between the UE 1001 and the communication TRPs, excluding the reference TRP, to the reference TRP, which is the TRP A 1011. In this case, based on the description above, the communication TRPs excluding the reference TRP may be the TRP B 1012 and the TRP C 1013. Accordingly, in step S1400, the UE 1001 may transmit TRP ID_B, which is the identifier indicating the TRP B 1012, and PD_B, which is the propagation delay between the TRP B 1012 and the UE 1001, to the TRP A 1011. Additionally, through the same message or a different message, the UE 1001 may transmit the TRP ID_C, which is the identifier indicating the TRP C 1013, and PD_C, which is the propagation delay between the TRP C 1013 and the UE 1001, to the TRP A 1011.

The reason why the message transmitted by the UE 1001 to the reference TRP, the TRP A 1011, in step S1400 includes information on only two TRPs is based on the method described earlier. In other words, this is because, in the procedure described in FIG. 12, the TRP C has not been configured as a communication TRP. If the TRP C is a communication TRP, the UE 1001 may transmit the information of the TRP C together or separately through another message to the reference TRP. In other words, if the number of communication TRPs excluding the reference TRP is one, the UE 1001 may transmit information of only one TRP, and if the number of communication TRPs is two or more, the UE 1001 may transmit information of all the communication TRPs to the reference TRP.

In FIG. 14, when the UE and a base station connected to the reference TRP, the TRP A 1011, are in an RRC-connected state, information on the TRP ID(s) and propagation delay(s) may be transmitted through UCI, UE assistance information, SRB3 UE assistance information, an RRC signaling message defined for transmitting information on the TRP ID(s) and propagation delay(s), or an SRB3 signaling message defined for transmitting information on the TRP ID(s) and propagation delay(s). The information included in the transmitted message may be exemplified as shown in Table 6 below.

[Table 6]

| | Delivered information (TRP ID & Propagation delay) |
|---|---|
| UE → TRP A | TRP ID_B & PD_B |
| | TRP ID_C & PD_C |

If the base station transmitted a UE information request message instructing the UE 1001 to report information on the TRP ID(s) and propagation delay(s) of communication TRPs excluding the reference TRP before the procedure of FIG. 14, the UE 1001 may transmit the information on the TRP ID(s) and propagation delay(s) of the communication TRP(s) excluding the reference TRP through a UE information response message in response to the UE information request message.

If the UE 1001 and the base station to which the reference TRP, the TRP A 1011 is connected, are not in the RRC-connected state, the UE 1001 may perform a secondary node addition procedure with the TRP and then transmit the information on the TRP ID(s) and propagation delay(s) of the communication TRP(s) excluding the reference TRP through SRB3 UE assistance information or a newly defined SRB3 signaling.

If the UE 1001 and the base station connected to the reference TRP, the TRP A 1011, are not in the RRC-connected state, the UE 1001 may perform a secondary node addition procedure with the TRP and then transmit information on the TRP ID(s) and propagation delay(s) of the communication TRPs excluding the reference TRP through SRB3 UE assistance information or a newly defined SRB3 signaling message.

Meanwhile, operations performed at higher layers in the procedure described in FIG. 14, such as operations performed at the MAC layer or the RRC layer, may all be performed under the control of the base station. Accordingly, the reference TRP, the TRP A 1011, may provide the received information to the base station or process the information under the control of the base station.

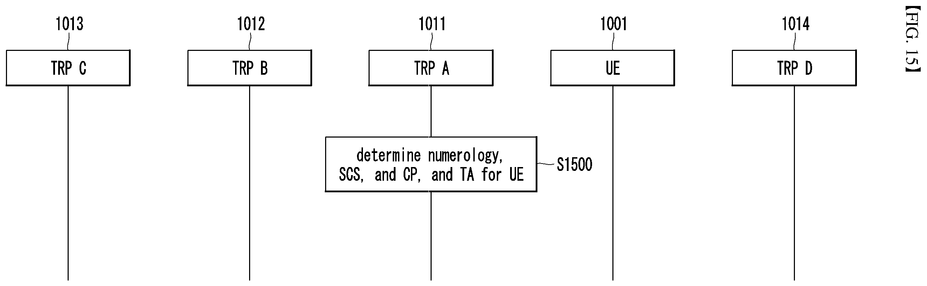

FIG. 15 is a sequence chart illustrating a case in which a reference TRP determines information on resources to be used between the reference TRP and a UE and information on resources to be used between communication TRPs, excluding the reference TRP, and the UE.

FIG. 15 illustrates the UE 1001 and four different TRPs 1011, 1012, 1013, and 1014 as entities performing operations of FIG. 15. In FIG. 15, the UE 1001 and TRPs 1011, 1012, 1013, and 1014 use the same reference numerals as described in FIGS. 10 to 14. In other words, the configurations of the UE 1001 and TRPs 1011, 1012, 1013, and 1014, which are the entities performing operations of FIG. 15, may be the same as those described in FIGS. 10 to 14. Additionally, the UE 1001 and TRPs 1011, 1012, 1013, and 1014, which are the entities performing operations of FIG. 15, may be in a state where the operations of FIGS. 10 to 14 have been performed in advance. In the following description of the operations of FIG. 15, for convenience of description, it is assumed that the operations of FIGS. 10 to 14 have already been performed. However, the operations of FIG. 15 may also be possible even if only some of the preceding operations have been performed. For example, FIG. 15 may be applied when only the procedure for the reference TRP to acquire the propagation delays with the UE has been performed, or when the reference TRP has acquired both information on the propagation delay between the reference TRP and the UE and information on the propagation delays between the communication TRPs, excluding the reference TRP, and the UE.

As shown in FIG. 15, in step S1500, the reference TRP, the TRP A 1011, may determine the maximum propagation delay and the minimum propagation delay using the propagation delays of the communication TRPs, which are the TRP A 1011, TRP B 1012, and TRP C 1013. Then, the TRP A 1011 may calculate a difference between the maximum propagation delay and the minimum propagation delay. Using the calculated difference, the TRP A 1011 may assign a CP to be used by the communication TRPs and assign a numerology and SCS corresponding to the CP. Then, the TRP A 1011 may determine a TA value for the UE 1001 using the minimum propagation delay value.

To describe this in more detail, it may be assumed that the propagation delay PD_A between the TRP A 1011 and the UE 1001, the propagation delay PD_B between the TRP B 1012 and the UE 1001, and the propagation delay PD_C between the TRP C 1013 and UE 1001 have the following relationship.

Assumption: PD_A < PD_B < PD_C

When determining the CP, the TRP A 1011, as the reference TRP, may ensure that a CP length CP_μ is longer than the difference between PD_C and PD_A so that ISI caused by propagation delays does not occur at any of the communication TRPs. This may be expressed mathematically as shown in Equation below.

[Equation 1]

$$CP\_\mu \geq PD\_C - PD\_A$$

Based on the determined CP length CP_μ as described above, numerology (μ), SCS value (SCS_μ), and TA value may be assigned such that the TA value corresponds to TA_μ, which is the same as PD_A.

If there are two or more CPs that satisfy the difference between the maximum propagation delay and the minimum propagation delay, the reference TRP, the TRP A 1011, may assign numerology, SCS, and CP values among the two or more CPs by considering other conditions such as a latency requirement of the UE 1011 and RSRP.

For example, the numerology, SCS, and CP may be assigned based on the latency requirement. If the latency requirement demanded by a service provided to the UE 1001 is higher, a numerology with a wider SCS and CP may be assigned to assign a wider frequency band.

As another example, numerology, SCS, and CP values may be assigned based on RSRP. If an RSRP of a signal to be transmitted to the UE 1001 is lower, a lower frequency band needs to be allocated to reduce a signal path loss, and a numerology corresponding to the lower frequency band along with the corresponding SCS and CP may be assigned.

Based on the method described above, the information allocated by the reference TRP, TRP A 1011, for communication with the UE 1001 may be exemplified as shown in Table 7 below.

[Table 7]

| TRP | Propagation delay | numerology | SCS | CP | TA |
|-----|-------------------|------------|-----|-----|-----|
| TRP A | PD_A | | | | |
| TRP B | PD_B | μ | SCS_μ | CP_μ | TA_μ |
| TRP C | PD_C | | | | |

The resource allocation operation described in FIG. 15 may be interpreted as a process that considers the propagation delays of all TRPs communicating with the UE 1001, in addition to the reference TRP, to allocate resources in order to address the issue in conventional 5G NR where the number of TRPs with which the UE 1001 can communicate is limited due to the differences in propagation delays among TRPs.

According to the procedure of FIG. 15 as described above, the numerology, SCS, CP values, and TA values assigned by the reference TRP, TRP A 1011, for the communication TRPs 1011, 1012, and 1013 may be used by the respective communication TRPs 1012 and 1013 for communication with the UE 1001 in subsequent processes. A more detailed description regarding this will be provided with reference to the following drawings.

Furthermore, the exemplary embodiment of the present disclosure as described above has been considered in an environment with almost no delay spread in anticipation of a future 6G environment. However, in an environment with significant multipath effects, the CP may be allocated additionally based on information on the delay spreads transmitted in the process of FIG. 11 to utilize the propagation delays and delay spreads of the respective TRPs and prevent ISI from occurring.

Meanwhile, operations performed at higher layers in the procedure described in FIG. 15, such as operations performed at the MAC layer or RRC layer, may all be performed under the control of the base station. Accordingly, the reference TRP, TRP A 1011, may transmit the corresponding information to the base station under the control of the base station. Additionally, the operations of step S1500 may actually be performed at the base station connected to TRP A 1011. It should be noted that, for convenience of description, FIG. 15 provides an example where the TRP A 1011 performs these operations.

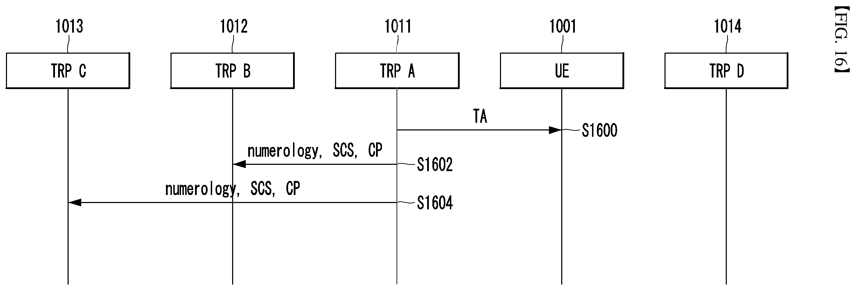

FIG. 16 is a sequence chart illustrating a case in which a reference TRP transmits information on allocated resources to other communication TRPs and a UE.

FIG. 16 illustrates the UE 1001 and four different TRPs 1011, 1012, 1013, and 1014 as entities performing operations of FIG. 16. In FIG. 16, the UE 1001 and TRPs 1011, 1012, 1013, and 1014 use the same reference numerals as those described in FIGS. 10 to 15. In other words, the configurations of the UE 1001 and TRPs 1011, 1012, 1013, and 1014, which are the entities performing the operations of FIG. 16, may have the same configurations as those described in FIGS. 10 to 15. Additionally, the UE 1001 and TRPs 1011, 1012, 1013, and 1014, which are the entities performing the operations of FIG. 16, may be in a state where the operations of FIGS. 10 to 15 have been performed. In the following description of the operations of FIG. 16, the description will be provided under the assumption that the operations of FIGS. 10 to 15 have already been performed for convenience of description. However, the operations of FIG. 16 may also be performed when only some of the previously described operations have been performed. For example, the operations of FIG. 16 may be performed when only the operations of FIG. 15 and the necessary procedures thereof have been performed. Additionally, in describing FIG. 16, an environment is assumed in which a backhaul exists between the TRP A 1011 and TRP B 1012, and a backhaul also exists between the TRP A 1011 and TRP C 1013.

In step S1600, the reference TRP, the TRP A 1011, may transmit a TA value TA_$\mu$ to the UE 1001. In this case, the TA value may be a TA value determined based on the description in FIG. 15. As another example, the TA value may be determined by the TRP A 1011 itself without the procedure of FIG. 15 or by another method unrelated to FIG. 15. As yet another example, the TA value may be determined by the base station connected to the reference TRP, TRP A 1011. Accordingly, in step S1600, the UE 1001 may receive the TA value TA_$\mu$ from the TRP A 1011. Upon receiving the TA value, the UE 1001 may determine a UL transmission timing based on the TA value, as described in FIGS. 9A and 9B.

If the UE 1001 is in an RRC-connected state with the base station connected to the reference TRP, TRP A 1011, the TRP A 1011 may transmit information on the TA to the UE 1001 through an SIB, DCI, or MAC-CE in step S1600. As another example, if a new RRC signaling message is defined for transmitting information on the TA or if a new SRB3 signaling message is defined, the information on the TA may be transmitted through the new RRC signaling message or the new SRB3 signaling message.

If the UE 1001 is not in the RRC-connected state with the base station connected to the reference TRP, TRP A 1011, the TRP A 1011 may transmit the information on the TA through an SIB, DCI, or MAC-CE, or if a new SRB3 signaling message is defined for transmitting the information on the TA, the information on the TA may be transmitted to the UE 1001 through the new SRB signaling message.

In step S1602, the reference TRP, TRP A 1011, may transmit the numerology, SCS, and CP to be used by the communication TRP, TRP B 1012, to the TRP B 1012. In this case, the reference TRP, TRP A 1011, may configure and transmit the identifier (TRP ID_B) of the communication TRP, TRP B 1012, along with the information. Additionally, the information on the numerology, SCS, and CP may be transmitted via the backhaul between the TRP A 1011 and TRP B 1012.

In step S1604, the reference TRP, TRP A 1011, may transmit the numerology, SCS, and CP to be used by the other communication TRP, TRP C 1013, to TRP C 1013. In this case, the reference TRP, TRP A 1011, may configure and transmit the identifier (TRP ID_C) of the communication TRP, TRP C 1013, along with the information. Additionally, the information on numerology, SCS, and CP may be transmitted via the backhaul between the TRP A 1011 and TRP C 1013.

Here, the information on the numerology, SCS, and CP transmitted from the TRP A 1011 to the TRP B 1012 in step S1602 and the information on the numerology, SCS, and CP transmitted from the TRP A 1011 to the TRP C 1013 in step S1604 may be the same as the information described in FIG. 15. In other words, the information transmitted from the TRP A 1011 to the TRP B 1012 in step S1602 and the information transmitted from the TRP A 1011 to the TRP C 1013 in step S1604 may be identical. Specifically, the numerology $\mu$, SCS value SCS_$\mu$, and CP value CP_$\mu$ transmitted in steps S1602 and S1604 may correspond to the values exemplified in Table 7 above.

Accordingly, in step S1602, the TRP B 1012 may receive the numerology $\mu$, SCS value SCS_$\mu$, and CP value CP_$\mu$ from the TRP A 1011, and in step S1604, the TRP C 1013 may receive the same values from the TRP A 1011. The TRP B 1012 and TRP C 1013 may then allocate the necessary resources for communication using the values received from the reference TRP, TRP A 1011, when communicating with the UE 1001.

The information transmitted by the TRP A 1011 to the UE 1001 in step S1600 and the information transmitted by the TRP A 1011 in steps S1602 and S1604 may be exemplified as shown in Table 8 below.

[Table 8]

|  | Delivered information |
|---|---|
| TRP A → TRP B | TRP ID = TRP ID_B |
|  | Numerology = $\mu$, SCS = SCS_$\mu$, CP = CP_$\mu$ |
| TRP A → TRP C | TRP ID = TRP ID_C |
|  | Numerology = $\mu$, SCS = SCS_$\mu$, CP = CP_$\mu$ |
| TRP A → UE | TA = TA_$\mu$ |

Meanwhile, operations performed at higher layers in the procedure described in FIG. 16, such as operations performed at the MAC layer or RRC layer, may all be performed under the control of the base station. Accordingly, the transmission control of the reference TRP, TRP A 1011, may be performed by the base station connected to the TRP A 1011. Additionally, the communication TRPs 1012 and 1013 that receive information from the TRP A 1011 may provide the received information to the respective base stations to which the TRPs are connected. If a specific TRP is connected to the same base station, the base station may process the information independently even if the TRP A 1011 does not transmit the information to the corresponding TRP.

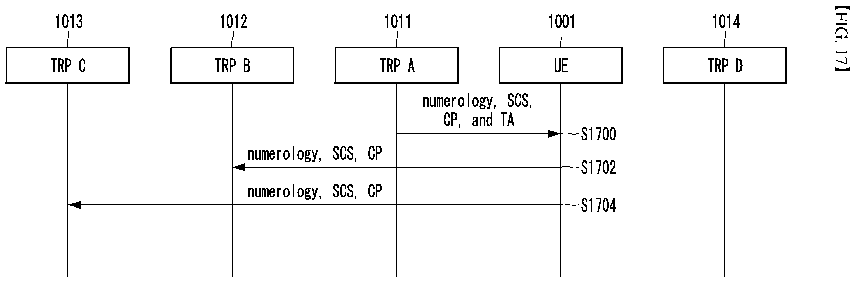

FIG. 17 is a sequence chart illustrating a case in which a reference TRP transmits information on resources to be used for communication with a UE by communication TRPs to other communication TRPs via the UE.

FIG. 17 illustrates the UE 1001 and four different TRPs 1011, 1012, 1013, and 1014 as entities performing operations of FIG. 17. In FIG. 17, the UE 1001 and TRPs 1011, 1012, 1013, and 1014 use the same reference numerals as those described in FIGS. 10 to 16. In other words, the configurations of the UE 1001 and TRPs 1011, 1012, 1013, and 1014, which are the entities performing the operations of FIG. 17, may have the same configurations as those described in FIGS. 10 to 16. Additionally, the UE 1001 and TRPs 1011, 1012, 1013, and 1014, which are the entities performing the operations of FIG. 17, may be in a state where the operations of FIGS. 10 to 15 have been performed. In the following description on the operations of FIG. 17, the description will be provided under the assumption that the operations of FIGS. 10 to 15 have already been performed for convenience of description. However, the operations of FIG. 17 may also be performed when only some of the previously described operations have been performed. For example, the operations of FIG. 17 may be performed when only the operations of FIG. 15 and the necessary procedures thereof have been performed.

Meanwhile, unlike FIG. 16, FIG. 17 assumes an environment in which no backhaul exists between the TRP A 1011 and the TRP B 1012, and no backhaul exists between the TRP A 1011 and the TRP C 1013. Additionally, the operations of FIG. 17 described below may also be applied in cases where a backhaul exists between the TRP A 1011 and the TRP B 1012 but cannot be used, and where a backhaul exists between the TRP A 1011 and the TRP C 1013 but cannot be used. Here, the backhaul may include not only a backhaul between TRPs but also a backhaul between the TRP and the connected base station.

In step S1700, the reference TRP, TRP A 1011, may transmit, to the UE 1001, information on resources, including numerology, SCS, and CP, to be used for communication between the UE 1001 and the other communication TRPs, the TRP B 1012 and the TRP C 1013, as well as the TA value $TA\_\mu$ to be used by the UE 1001. In this case, the numerology, SCS, and CP, as well as the TA value to be used by the UE 1001, may be determined based on the description of FIG. 15.

Meanwhile, the TA value may be determined by the reference TRP, TRP A 1011, itself without performing the procedure of FIG. 15 or by another method unrelated to FIG. 15. As another example, the TA value may be determined by the base station connected to the reference TRP, TRP A 1011. Accordingly, in step S1600, the UE 1001 may receive information on the numerology, SCS, and CP, as well as the TA value $TA\_\mu$, from the TRP A 1011. Upon receiving the TA value, the UE 1001 may determine a UL transmission timing based on the TA value, as described in FIGS. 9A and 9B.

If the UE 1001 is in the RRC-connected state with the base station connected to the reference TRP, TRP A 1011, the TRP A 1011 may transmit information on the numerology, SCS, and CP, as well as the TA information, to the UE 1001 through an SIB, DCI, or MAC-CE in step S1600. As another example, if a new RRC signaling message is defined for transmitting the TA information or if a new SRB3 signaling message is defined for transmitting the TA information, the TA information may be transmitted through the new RRC signaling message or the new SRB3 signaling message.

If the UE 1001 is not in the RRC-connected state with the base station connected to the reference TRP, TRP A 1011, the TRP A 1011 may transmit the TA information through an SIB, DCI, or MAC-CE, or if a new SRB3 signaling message is defined for transmitting the TA information, the TA information may be transmitted to the UE 1001 through the new SRB signaling message.

In step S1702, the UE 1001 may transmit information on the numerology, SCS, and CP to be used by the other communication TRP, TRP B 1012, to the TRP B 1012. In this case, the information on the numerology, SCS, and CP may be the information transmitted by the TRP A 1011 to the UE 1001 in step S1700. Additionally, the UE 1001 may transmit the identifier TRP ID_B of the TRP B 1012 together with the information on the numerology, SCS, and CP to indicate the recipient of the information. Accordingly, the TRP B 1012 may receive the information on the numerology, SCS, and CP from the UE 1001. The TRP B 1012 may use the received information on the numerology, SCS, and CP for resource allocation for communication with the UE 1001.

In step S1704, the UE 1001 may transmit information on the numerology, SCS, and CP to be used by the other communication TRP, TRP C 1013, to the TRP C 1013. In this case, the information on the numerology, SCS, and CP may be the information transmitted by the TRP A 1011 to the UE 1001 in step S1700. Additionally, the UE 1001 may transmit the identifier TRP ID_C of the TRP C 1013 together with the information on the numerology, SCS, and CP to indicate the recipient of the information. Accordingly, in step S1704, the TRP C 1013 may receive the information on the numerology, SCS, and CP from the UE 1001. The TRP C 1013 may use the received information on the numerology, SCS, and CP for resource allocation for communication with the UE 1001.

The operations of steps S1702 and S1704 described above may correspond to the operation in which, compared to FIG. 16, the reference TRP, TRP A 1011, transmits information on the numerology, SCS, and CP to be used for communication with the UE 1001 to other communication TRPs, the TRP B 1012 and the TRP C 1013, via the backhaul.

When the UE 1001 transmits the information on the numerology, SCS, and CP received from the TRP A 1011 to the TRP B 1012 and TRP C 1013 along with their TRP IDs, a transmission scheme may vary depending on an RRC connection state between the base station connected to each of the TRP B 1012 and TRP C 1013 and the UE 1001. If the base station connected to the communication TRP is in the RRC-connected state with the UE 1001, the UE 1001 may use one of UCI, UE capability information, or SRB3 UE assistance information to transmit the information on the numerology, SCS, and CP in step S1702 and/or step S1704. As another example, if a newly defined RRC signaling message or a newly defined SRB3 signaling message exists to allow the UE to transmit information on the numerology, SCS, and CP to the TRP, and if the base station connected to the communication TRP is in the RRC-connected state with the UE 1001, the UE 1001 may use either the newly defined RRC signaling message or the newly defined SRB3 signaling message to transmit the information on the numerology, SCS, and CP to the communication TRP.

On the other hand, if the base station connected to the communication TRP is not in the RRC-connected state with the UE 1001, the UE 1001 may transmit information on the numerology, SCS, and CP to the communication TRP in step S1702 and/or step S1704 through SRB3 UE assistance information or a newly defined SRB3 signaling message for transmitting the information on the numerology, SCS, and CP.

The transmission of information according to the present disclosure, as described above, may be exemplified in Table 9 below.

[Table 9]

| | Delivered information |
|---|---|
| TRP A → UE → TRP B | TRP ID = TRP ID_B |
| | Numerology = $\mu$, SCS = SCS_$\mu$, CP = CP_$\mu$ |
| TRP A → UE → TRP C | TRP ID = TRP ID_C |
| | Numerology = $\mu$, SCS = SCS_$\mu$, CP = CP_$\mu$ |
| TRP A → UE | TA = TA_$\mu$ |

Additionally, in the example of FIG. 17, the communication TRPs 1011, 1012, and 1013 may all be TRPs connected to different base stations. If the base station connected to the TRP B 1012 is the same as the base station connected to the TRP A 1011, the base station may not need to transmit the information to the TRP B 1012. Accordingly, the information for transmission in 'TRP A → UE → TRP B' as exemplified in Table 9 may not be provided to the UE 1001. Similarly, if the base station connected to the TRP C 1013 is also the same as the base station connected to the TRP A 1011, the information for transmission in 'TRP A → UE → TRP C' may also not be provided to the UE 1001. The TRP B 1012 and TRP C 1013, as exemplified in FIG. 17, may both be TRPs connected to different base stations from the TRP A 1011.

Meanwhile, the control on the operation in which the TRP A 1011 transmits the information in step S1700 may actually be performed by the base station connected to the TRP A 1011. Additionally, the TRP B 1012 and TRP C 1013 may provide the received information to the respective base stations to which they are connected. Through this, the base stations connected to the respective TRPs may perform necessary operations or control accordingly.

Furthermore, the procedures of FIGS. 10 to 17 described above may be combined in their entirety, partially combined, or applied in combination with other exemplary embodiments not described in the present disclosure.

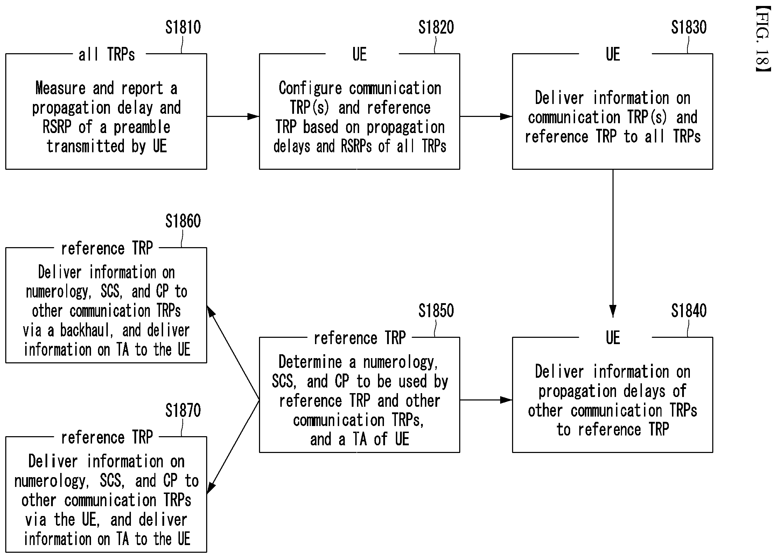

FIG. 18 is a conceptual diagram illustrating an operational flow based on an overall combination of exemplary embodiments of the present disclosure.

As shown in FIG. 18, in step S1810, each of all TRPs may measure a propagation delay and RSRP of a preamble transmitted by a UE and provide the measured values to the UE. In other words, the UE may transmit a UE PRACH preamble to each of all TRPs capable of SSB reception, and each of all TRPs may receive the UE PRACH preamble transmitted by the UE and measure a propagation delay and RSRP of the preamble. The measurement operation up to this point may follow the same procedure as the exemplary embodiment described in FIG. 10. Accordingly, specific operations related to the measurement process in step S1810 may use at least a part of the operations described in FIG. 10.

Additionally, in step S1810, each of all TRPs that has received the UE PRACH preamble may transmit the measured propagation delay and RSRP values of the preamble to the UE along with its TRP ID. The operation of providing the measured information to the UE may correspond to the exemplary embodiment described in FIG. 11. Accordingly, specific operations in which all TRPs transmit the measured information to the UE in step S1810 may use at least a part of the operations described in FIG. 13.

Accordingly, in step S1810, the UE may receive information on the propagation delay values and RSRP values of the preambles from all TRPs.

**EP 4 604 654 A1**

In step S1820, the UE may configure (or determine) communication TRP(s) and a reference TRP based on the propagation delay values and RSRP values received from all TRPs. The operation in step S1820 may correspond to the exemplary embodiment described in FIG. 12. Accordingly, specific operations of step S1820 may use at least a part of the operations described in FIG. 13.

In step S1830, the UE may deliver information on the communication TRP(s) and the reference TRP to all TRPs. The operation in step S1830 may correspond to the exemplary embodiment described in FIG. 13. Accordingly, specific operations of step S1830 may use at least a part of the operations described in FIG. 13.

In step S1840, the UE may transmit information the propagation delays of other communication TRPs to the reference TRP. Accordingly, specific operations of step S1840 may use at least a part of the operations described in FIG. 14.

In step S1850, the reference TRP may determine a numerology, SCS, and CP to be used by the reference TRP and other communication TRPs. Additionally, the reference TRP may determine a TA value to be used for communication with the UE. Accordingly, specific operations of step S1850 may use at least a part of the operations described in FIG. 15.

Step S1860 may correspond to a case where a backhaul exists between the TRPs. Accordingly, in step S1860, the reference TRP may deliver information on the determined numerology, SCS, and CP to other communication TRPs via the backhaul. Additionally, the reference TRP may transmit information on the determined TA value to the UE. Specific operations of step S1860 may use at least a part of the operations described in FIG. 16.

Step S1870 may correspond to a case where a backhaul does not exist between the TRPs or, even if a backhaul exists, it cannot be used. Accordingly, in step S1870, the reference TRP may instruct the UE to deliver information on the numerology, SCS, and CP to other communication TRPs via the UE. Additionally, the reference TRP may deliver information on the determined TA value to UE. Specific operations of step S1870 may use at least a part of the operations described in FIG. 17.

Meanwhile, in the exemplary embodiments of FIGS. 10 to 18, the determination of numerology, SCS, CP, and TA values for resource allocation has been described under the assumption that the TRP performs the determination. However, such determination may also be performed by the base station and then the determined information may be delivered to each TRP. When the base station determines the numerology, SCS, CP, and TA values, an additional procedure may be performed in which the TRPs report the received measurement values to the base station, and receive the determined values from the base station.

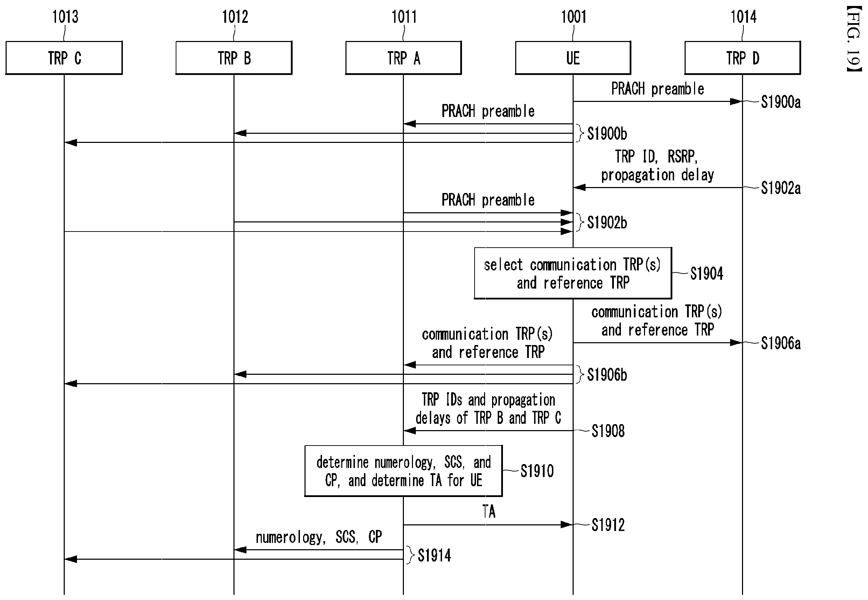

FIG. 19 is a sequence chart illustrating a case where, in presence of a backhaul between TRPs, resources for communication with a UE are determined using all exemplary embodiments.

In FIG. 19, the UE 1001 and four different TRPs 1011, 1012, 1013, and 1014 are exemplified as entities performing operations, and since all these entities are described in the present disclosure, they may perform the same configurations and operations as previously described.

In steps S1900a and S1900b, the UE 1001 may transmit a UE PRACH preamble to each of all TRPs 1011 to 1014 capable of SSB reception. Steps S1900a and S1900b may correspond to the procedure in which the UE 1001 transmits the UE PRACH preamble to each of all TRPs 1011 to 1014, as described in FIG. 10.

In steps S1902a and S1902b, each of all TRPs 1011 to 1014 that has received the UE PRACH preamble may transmit its identifier, as well as the received preamble's RSRP value and propagation delay value, to the UE 1001. Steps S1902a and S1902b may correspond to the procedure in which each of all TRPs 1011 to 1014 transmits the measured information to the UE 1001, as described in FIG. 11.

In step S1904, the UE 1001 may determine communication TRP(s) and a reference TRP based on the received propagation delay values and RSRP values. Step S1904 may correspond to the procedure described in FIG. 12, in which communication TRP(s) are determined based on the received propagation delay values and a reference TRP is determined among the communication TRP(s), or communication TRP(s) are determined based on the received RSRP values and a reference TRP is determined among the communication TRP(s).

In steps S1906a and S1906b, the UE 1001 may notify all TRPs 1011 to 1014 of the communication TRP(s) and the reference TRP. If a specific TRP (e.g. TRP D 1014) is not a communication TRP, the specific TRP may be informed that it is not a communication TRP, or information on the communication TRP(s) and the reference TRP may be configured to not be notified to TRPs that are not communication TRPs. Steps S1906a and S1906b may correspond to the same operation described in FIG. 13.

In step S1908, the UE 1001 may transmit the TRP IDs of the TRP B 1012 and TRP C 1013, which are communication TRPs but not the reference TRP, along with information on the propagation delay between each TRP and the UE 1001, to the reference TRP 1011. Step S1908 may correspond to the same operation as described in FIG. 14.

In step S1910, the reference TRP, TRP A 1011, may determine a numerology, SCS, and CP, and determine a TA value for the UE 1001. The operation in step S1910 may correspond to the same operation as described in FIG. 15

In step S1912, the reference TRP, TRP A 1011, may deliver the TA value to the UE 1001. Then, in step S1914, the reference TRP, TRP A 1011, may transmit information on the numerology, SCS, and CP to the TRP B 1012 and TRP C 1013, which are not the reference TRP, via the backhaul. Steps S1912 and S1914 may correspond to the same operations as described in FIG. 16.

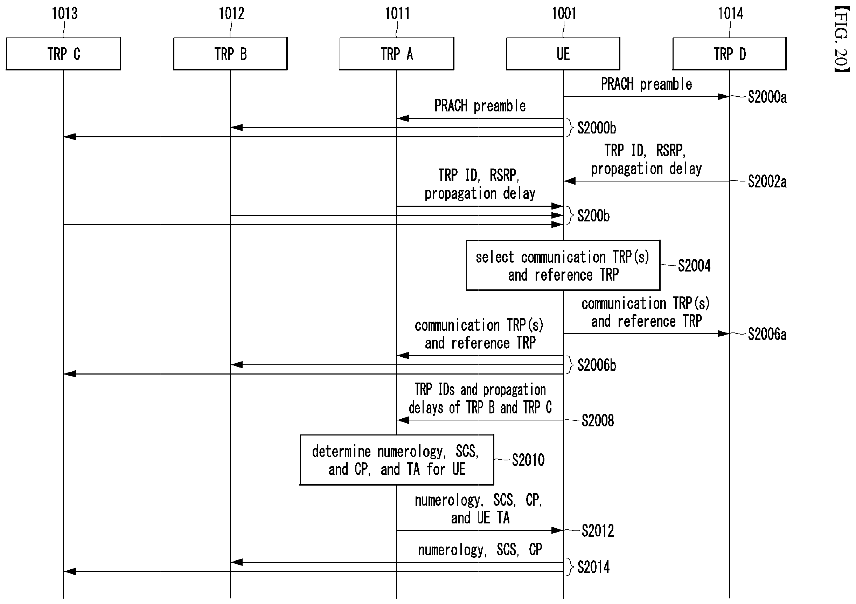

FIG. 20 is a sequence chart illustrating a case where resources for communication with a UE are determined using all exemplary embodiments in an environment where no backhaul exists between TRPs.

In FIG. 20, the UE 1001 and four different TRPs 1011, 1012, 1013, and 1014 are exemplified as entities performing operations, and since all these entities are described in the present disclosure, they may perform the same configurations and operations as previously described.

Steps S2000a and S2000b may correspond to steps S1900a and S1900b described in FIG. 19. Steps S2002a and S2002b may correspond to steps S1902a and S1902b described in FIG. 19. Step S2004 may correspond to step S1904 described in FIG. 19. Steps S2006a and S2006b may correspond to steps S1906a and S1906b described in FIG. 19. Step S2008 may correspond to step S1908 described in FIG. 19. Step S2010 may correspond to step S1910 described in FIG. 19. Since the corresponding steps follow the same operation, redundant description is omitted.

In step S2012, since there is no backhaul link between the reference TRP, TRP A 1011, and the other communication TRPs 1012 and 1013, the reference TRP may transmit information on the numerology, SCS, and CP to the UE 1001 for transmission to the other communication TRPs. In this case, the TRP A 1011 may instruct the UE 1001 to transmit the information to the other communication TRPs. Additionally, the TRP A 1011 may transmit information on the TA value to be used by the UE 1001 to the UE 1001.

In step S2014, the UE 1001 may transmit the information on the numerology, SCS, and CP, which is received from the reference TRP (TRP A 1011), to the TRP B 1012 and TRP C 1013, which are not the reference TRP. Steps S2012 and S2014 may correspond to the same operations as described in FIG. 17.

Meanwhile, the methods described in FIGS. 10 to 20 may correspond to a case where the same frequency band is used, that is, where control resource sets (CORESETs) used by all TRPs are the same. If different TRPs use different CORESETs, a different TA value may be used for each TRP group or for each TRP individually.

The operations of the method according to the exemplary embodiment of the present disclosure can be implemented as a computer readable program or code in a computer readable recording medium. The computer readable recording medium may include all kinds of recording apparatus for storing data which can be read by a computer system. Furthermore, the computer readable recording medium may store and execute programs or codes which can be distributed in computer systems connected through a network and read through computers in a distributed manner.

The computer readable recording medium may include a hardware apparatus which is specifically configured to store and execute a program command, such as a ROM, RAM or flash memory. The program command may include not only machine language codes created by a compiler, but also high-level language codes which can be executed by a computer using an interpreter.

Although some aspects of the present disclosure have been described in the context of the apparatus, the aspects may indicate the corresponding descriptions according to the method, and the blocks or apparatus may correspond to the steps of the method or the features of the steps. Similarly, the aspects described in the context of the method may be expressed as the features of the corresponding blocks or items or the corresponding apparatus. Some or all of the steps of the method may be executed by (or using) a hardware apparatus such as a microprocessor, a programmable computer or an electronic circuit. In some embodiments, one or more of the most important steps of the method may be executed by such an apparatus.

In some exemplary embodiments, a programmable logic device such as a field-programmable gate array may be used to perform some or all of functions of the methods described herein. In some exemplary embodiments, the field-programmable gate array may be operated with a microprocessor to perform one of the methods described herein. In general, the methods are preferably performed by a certain hardware device.

The description of the disclosure is merely exemplary in nature and, thus, variations that do not depart from the substance of the disclosure are intended to be within the scope of the disclosure. Such variations are not to be regarded as a departure from the spirit and scope of the disclosure. Thus, it will be understood by those of ordinary skill in the art that various changes in form and details may be made without departing from the spirit and scope as defined by the following claims.

## Claims

1. A method of a user equipment (UE), comprising:

    transmitting a preamble signal to each of two or more transmission and reception points (TRPs);
    receiving, from each of the two or more TRPs, first information including a propagation delay of the preamble signal and a received power (RP) value measured at each of the two or more TRPs;
    determining a first communication group including TRPs capable of communication based on the first information received from each of the two or more TRPs;

selecting one reference TRP within the first communication group;

transmitting, to the reference TRP, the first information received from one or more TRPs other than the reference TRP among the TRPs capable of communication included in the first communication group; and

receiving, from the reference TRP, a timing advance (TA) value to be used for uplink communication with the TRPs capable of communication included in the first communication group.

2. The method according to claim 1, wherein the first information received from each of the two or more TRPs further includes an identifier (ID) of a TRP transmitting the first information.

3. The method according to claim 1, further comprising: transmitting, to all TRPs that have received the first information, second information including information on the reference TRP and the one or more TRPs included in the first communication group.

4. The method according to claim 1, wherein each of the TRPs capable of communication included in the first communication group is a TRP having a propagation delay smaller than a preset threshold value.

5. The method according to claim 4, wherein the preset threshold value is determined based on capability information of the UE.

6. The method according to claim 4, wherein the reference TRP is a TRP having a highest RP value among the TRPs capable of communication within the first communication group.

7. The method according to claim 1, wherein each of the TRPs capable of communication included in the first communication group is a TRP having an RP value equal to or greater than a preset threshold value.

8. The method according to claim 7, wherein the reference TRP is a TRP having a smallest propagation delay among the TRPs capable of communication within the first communication group.

9. The method according to claim 1, further comprising:

receiving, from the reference TRP, a command instructing to transmit third information to at least one TRP included in the first communication group and the third information; and

transmitting the third information to the at least one TRP included in the first communication group,

wherein the third information includes at least one of a TRP identifier, a numerology, a subcarrier spacing (SCS), or a cyclic prefix (CP).

10. A method of a first base station, comprising:

receiving a preamble signal from a user equipment (UE) via a transmission and reception point (TRP) connected to the first base station;

measuring a propagation delay and a received power (RP) of the preamble signal;

transmitting first information including the measured propagation delay and the RP to the UE via the TRP;

receiving second information including information on at least one other TRP and information on propagation delay(s) and RP(s) transmitted by the at least one other TRP to the UE;

determining a timing advance (TA) value to be used for communication with the UE and third information, based on the first information and the second information corresponding to the at least one other TRP; and

transmitting the TA value to the UE via the TRP,

wherein the third information includes at least one of a numerology, a subcarrier spacing (SCS), or a cyclic prefix (CP) to be used by the at least one other TRP for communication with the UE.

11. The method according to claim 10, further comprising: receiving, from the UE, information on a first communication group including the at least one other TRP capable of communicating with the UE.

12. The method according to claim 11, further comprising: transmitting the third information to a TRP included in the first communication group or a second base station connected to a TRP included in the first communication group.

13. The method according to claim 11, further comprising: transmitting the third information and first instruction information to the UE,

wherein the first instruction information is information that instructs to transmit the third information to a TRP included in the first communication group.

14. A user equipment (UE), comprising at least one processor, wherein the at least one processor causes the UE to perform:

transmitting a preamble signal to each of two or more transmission and reception points (TRPs);
receiving, from each of the two or more TRPs, first information including a propagation delay of the preamble signal and a received power (RP) value measured at each of the two or more TRPs;
determining a first communication group including TRPs capable of communication based on the first information received from each of the two or more TRPs;
selecting one reference TRP within the first communication group;
transmitting, to the reference TRP, the first information received from one or more TRPs other than the reference TRP among the TRPs capable of communication included in the first communication group; and
receiving, from the reference TRP, a timing advance (TA) value to be used for uplink communication with the TRPs capable of communication included in the first communication group.

15. The UE according to claim 14, wherein the first information received from each of the two or more TRPs further includes an identifier (ID) of a TRP transmitting the first information.

16. The UE according to claim 14, wherein the at least one processor further causes the UE to perform: transmitting, to all TRPs that have received the first information, second information including information on the reference TRP and the one or more TRPs included in the first communication group.

17. The UE according to claim 14, wherein each of the TRPs capable of communication included in the first communication group is a TRP having a propagation delay smaller than a preset threshold value.

18. The UE according to claim 17, wherein the preset threshold value is determined based on capability information of the UE, and the reference TRP is a TRP having a highest RP value among the TRPs capable of communication within the first communication group.

19. The UE according to claim 15, wherein each of the TRPs capable of communication included in the first communication group is a TRP having an RP value equal to or greater than a preset threshold value, and the reference TRP is a TRP having a smallest propagation delay among the TRPs capable of communication within the first communication group.

20. The UE according to claim 15, wherein the at least one processor causes the UE to perform:

receiving, from the reference TRP, a command instructing to transmit third information to at least one TRP included in the first communication group and the third information; and
transmitting the third information to the at least one TRP included in the first communication group,
wherein the third information includes at least one of a TRP identifier, a numerology, a subcarrier spacing (SCS), or a cyclic prefix (CP).

【FIG. 1】

【FIG. 2】

【FIG. 3】

【FIG. 4a】

【FIG. 4b】

【FIG. 5】

【FIG. 6】

subframe (1ms)

| slot #0 | slot #1 | ... | slot #n |

【FIG. 7】

slot

| #0 | #1 | #2 | #3 | #4 | #5 | #6 | #7 | #8 | #9 | #10 | #11 | #12 | #13 |

OFDM symbol

【FIG. 8】

REG

N subcarriers

RE

N OFDM symbols

[FIG. 9a]

EP 4 604 654 A1

【FIG. 9b】

[FIG. 10]

1013          1012          1011          1001          1014

TRP C         TRP B         TRP A         UE            TRP D

                            PRACH preamble
                            ←――――――――――            S1000

              PRACH preamble
              ←――――――――――――――――            S1002

PRACH preamble
←――――――――――――――――――――――            S1004

                                          PRACH preamble
                                          ――――――――――――→    S1006

[FIG. 11]

EP 4 604 654 A1

[FIG. 12]

EP 4 604 654 A1

1013

1012

1011

1001

1014

| TRP C | | TRP B | | TRP A | | UE | | TRP D |

select communication TRP(s)
and reference TRP — S1200

[FIG. 13]

【FIG. 14】

【FIG. 15】

[FIG. 16]

EP 4 604 654 A1

47

【FIG. 17】

[FIG. 18]

EP 4 604 654 A1

S1810

all TRPs

Measure and report a
propagation delay and
RSRP of a preamble
transmitted by UE

S1820

UE

Configure communication
TRP(s) and reference
TRP based on propagation
delays and RSRPs of all TRPs

S1830

UE

Deliver information on
communication TRP(s) and
reference TRP to all TRPs

S1860

reference TRP

Deliver information on
numerology, SCS, and CP to
other communication TRPs
via a backhaul, and deliver
information on TA to the UE

S1850

reference TRP

Determine a numerology,
SCS, and CP to be used by
reference TRP and other
communication TRPs,
and a TA of UE

S1840

UE

Deliver information on
propagation delays of
other communication TRPs
to reference TRP

S1870

reference TRP

Deliver information on
numerology, SCS, and CP to
other communication TRPs
via the UE, and deliver
information on TA to the UE

【FIG. 19】

【FIG. 20】

## INTERNATIONAL SEARCH REPORT

International application No.

**PCT/KR2024/000743**

| A. | CLASSIFICATION OF SUBJECT MATTER |
|---|---|

**H04W 72/542**(2023.01)i; **H04W 72/231**(2023.01)i; **H04W 56/00**(2009.01)i; **H04B 17/309**(2015.01)i

According to International Patent Classification (IPC) or to both national classification and IPC

| B. | FIELDS SEARCHED |
|---|---|

Minimum documentation searched (classification system followed by classification symbols)

H04W 72/542(2023.01); G01S 5/02(2010.01); H04L 5/00(2006.01); H04W 56/00(2009.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: transmission and reception point, propagation delay, group, timing advance, uplink, preamble, received power, select

| C. | DOCUMENTS CONSIDERED TO BE RELEVANT |
|---|---|

| Category* | Citation of document, with indication, where appropriate, of the relevant passages | Relevant to claim No. |
|---|---|---|
| A | WO 2018-147700 A1 (LG ELECTRONICS INC.) 16 August 2018 (2018-08-16)<br>See paragraphs [0174]-[0187]; and claims 1-12. | 1-20 |
| A | INTERDIGITAL, INC. CSI Enhancement for CJT and Medium/High UE Velocities. R1-2210927, 3GPP TSG RAN WG1 #111. Toulouse, France. 07 November 2022.<br>See section 4. | 1-20 |
| A | SAMSUNG. Views on CSI enhancements. R1-2212030, 3GPP TSG RAN WG1#111, Meeting. 07 November 2022.<br>See sections 2.1, 3.1 and 4.1. | 1-20 |
| A | KR 10-2023-0008714 A (QUALCOMM INCORPORATED) 16 January 2023 (2023-01-16)<br>See paragraph [0168]; claim 1; and figure 19. | 1-20 |
| A | US 2022-0248358 A1 (NOKIA TECHNOLOGIES OY) 04 August 2022 (2022-08-04)<br>See paragraphs [0120]-[0123]; and claim 16. | 1-20 |

☐ Further documents are listed in the continuation of Box C.   ☑ See patent family annex.

| | | |
|---|---|---|
| \* | Special categories of cited documents: | "T" later document published after the international filing date or priority date and not in conflict with the application but cited to understand the principle or theory underlying the invention |
| "A" | document defining the general state of the art which is not considered to be of particular relevance | |
| "D" | document cited by the applicant in the international application | "X" document of particular relevance; the claimed invention cannot be considered novel or cannot be considered to involve an inventive step when the document is taken alone |
| "E" | earlier application or patent but published on or after the international filing date | |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&" document member of the same patent family |

| Date of the actual completion of the international search | Date of mailing of the international search report |
|---|---|
| **01 May 2024** | **01 May 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
Information on patent family members

International application No.

**PCT/KR2024/000743**

| Patent document cited in search report | | | Publication date (day/month/year) | Patent family member(s) | | | Publication date (day/month/year) |
|---|---|---|---|---|---|---|---|
| WO | 2018-147700 | A1 | 16 August 2018 | US | 11108513 | B2 | 31 August 2021 |
| | | | | US | 2020-0007282 | A1 | 02 January 2020 |
| KR | 10-2023-0008714 | A | 16 January 2023 | CN | 115669101 | A | 31 January 2023 |
| | | | | EP | 4147498 | A1 | 15 March 2023 |
| | | | | JP | 2023-525985 | A | 20 June 2023 |
| | | | | TW | 202147897 | A | 16 December 2021 |
| | | | | US | 11576139 | B2 | 07 February 2023 |
| | | | | US | 2021-0352605 | A1 | 11 November 2021 |
| | | | | WO | 2021-225964 | A1 | 11 November 2021 |
| US | 2022-0248358 | A1 | 04 August 2022 | WO | 2021-008673 | A1 | 21 January 2021 |

Form PCT/ISA/210 (patent family annex) (July 2022)